# EUROPEAN PATENT APPLICATION

(11) **EP 4 428 466 A1**
(43) Date of publication of application: **11.09.2024**
(21) Application number: 24162594.6
(22) Date of filing: 11.03.2024
(51) Int. Cl.: F24H 1/00, B60H 1/00, B60H 1/22, F24H 1/10, F24H 1/12, F24H 9/00, F24H 9/1818

(54) **VEHICULAR TEMPERATURE CONTROL SYSTEM**

(30) Priority: 09.03.2023 JP 2023036304; 17.03.2023 JP 2023043052; 12.05.2023 JP 2023079275
(71) Applicant: Valeo Systèmes Thermiques, 78320 Le Mesnil-Saint-Denis (FR)
(72) Inventor: ARAKI, Daisuke, Kumagaya-shi 360-0193 (JP); TSUJI, Teruaki, Kumagaya-shi 360-0193 (JP); MIYAKOSHI, Ryo, Kumagaya-shi 360-0193 (JP); IDA, Hiroyuki, Kumagaya-shi 360-0193 (JP); ISHINO, Hiroyuki, Kumagaya-shi 360-0193 (JP); HATAKEYAMA, Jun, Kumagaya-shi 360-0193 (JP)
(74) Representative: Valeo Systèmes Thermiques

(57) **Abstract**

A vehicular temperature control system according to the present disclosure includes a liquid heat medium circuit, a liquid heating device, and a plurality of heat-dissipating heat exchangers, wherein the liquid heating device includes a tank and a heater, wherein the tank includes at least one flow path, at least one flow path entrance, and a plurality of flow path exits, wherein the heater is arranged inside one flow path of the at least one flow path, wherein the plurality of flow path exits includes first to n-th flow path exits ("n" being a natural number greater than or equal to 2), wherein the liquid heat medium flowing out from the first flow path exit is relatively lower in temperature than the liquid heat medium flowing out from the n-th flow path exit, wherein the liquid heat medium circuit includes first to n-th branching paths connected to respective flow path exits serving as the first to n-th flow path exits, and wherein the plurality of heat-dissipating heat exchangers is arranged on respective branching paths serving as the first to n-th branching paths.

## Description

### BACKGROUND OF THE INVENTION

### 1. Field of the Invention

The present disclosure relates to a vehicular temperature control system.

### 2. Description of the Related Art

There has been disclosed a liquid heating device in which an electrothermal heater is contained in a tank through which warm water flows as a liquid heat medium (for example, see Patent Literatures 1 and 2). The liquid heating device disclosed in Patent Literatures 1 and 2 is a device which is applied to a vehicular air conditioner and which heats warm water serving as a heat medium so as to implement air heating operation, in which warm water is supplied from an inflow port to the tank and is then heated and the heated warm water is caused to flow out from one outflow port.

There has been disclosed a vehicular air conditioner in which two heater cores (heat-dissipating heat exchangers) are connected to a circulation loop for coolant water for use in a driving engine (for example, see Patent Literature 3).
Patent Literature 1 : JP-A-2014-031069
Patent Literature 2 : JP-A-2017-211093
Patent Literature 3 : JP-A-H07-025219

In supplying a liquid heat medium to a plurality of heat-dissipating heat exchangers as in Patent Literature 3, liquid heat media different in temperature from each other may be required for the respective heat-dissipating heat exchangers. However, in conventional liquid heating devices such as those disclosed in Patent Literatures 1 and 2, the respective temperatures of liquid heat media to be supplied to a plurality of heat-dissipating heat exchangers are the same as each other, so that such a requirement cannot be met.

While a technique which arranges a plurality of liquid heating devices depending on amounts of heat dissipation of the respective heat-dissipating heat exchangers is conceivable, there are issues in which vehicles may increase in size and temperature control systems may become complicated.

### SUMMARY OF THE INVENTION

The present disclosure is directed to providing a vehicular temperature control system capable of supplying a liquid heat medium at an appropriate temperature depending on an amount of heat dissipation of each of a plurality of heat-dissipating heat exchangers mounted in a vehicle.

A vehicular temperature control system according to the present invention includes a liquid heat medium circuit, in which a liquid heat medium circulates, a liquid heating device, which performs temperature control on the liquid heat medium, and a plurality of heat-dissipating heat exchangers, which dissipates heat from the liquid heat medium, wherein the liquid heating device includes a tank, through which the liquid heat medium flows, and a heater, which heats the liquid heat medium, wherein the tank includes at least one flow path, at least one flow path entrance, and a plurality of flow path exits, wherein the heater is arranged inside one flow path of the at least one flow path, wherein the plurality of flow path exits includes first to n-th flow path exits ("n" being a natural number greater than or equal to 2), wherein the liquid heat medium flowing out from the first flow path exit is relatively lower in temperature than the liquid heat medium flowing out from the n-th flow path exit, wherein the liquid heat medium circuit includes first to n-th branching paths connected to respective flow path exits serving as the first to n-th flow path exits, and wherein the plurality of heat-dissipating heat exchangers is arranged on respective branching paths serving as the first to n-th branching paths.

In the vehicular temperature control system according to the present invention, it is favorable that, with regard to the liquid heating device, the tank includes one flow path as the flow path, the plurality of flow path exits includes, along a flow direction of the flow path, the first to n-th flow path exits arranged in sequence from an upstream side of the flow direction, and the first flow path exit is located between the flow path entrance and the n-th flow path exit in the flow direction. Applying the liquid heating device like this enables supplying liquid heat media at respective different temperatures from one flow path.

In the vehicular temperature control system according to the present invention, it is favorable that, with regard to the liquid heating device, the tank includes a first chamber and a second chamber formed as a compartment separate from the first chamber, the first chamber includes a first flow path as the flow path, a first flow path entrance as the flow path entrance, and the first flow path exit, the second chamber includes a second flow path as the flow path, a second flow path entrance as the flow path entrance, and a second flow path exit as the n-th flow path exit, the second flow path includes a cylindrical second side wall and a pair of second end walls, which occlude respective both end portions of the second side wall, the heater is arranged inside the second flow path, the second flow path exit is provided on a more downstream side of the second flow path than the second flow path entrance, the first flow path is adjacent to the second side wall, and the second side wall, which separates the first flow path and the second flow path from each other, is a heat exchange wall. Applying the liquid heating device like this enables supplying liquid heat media at respective different temperatures in two channels.

In the vehicular temperature control system according to the present invention, it is favorable that the liquid heating device includes, as the heater, a plurality of heater portions arranged in series along the flow direction and each branching path of the first to n-th branching paths includes an on-off valve. It is possible to selectively supply, to respective heat-dissipating heat exchangers, liquid heat media with more appropriate amounts of heat according to amounts of heat dissipation required for the respective heat-dissipating heat exchangers.

In the vehicular temperature control system according to the present invention, it is favorable that the on-off valve has an opening regulating function. It is possible to selectively supply, to respective heat-dissipating heat exchangers, liquid heat media with more appropriate amounts of heat and appropriate flow rates according to amounts of heat dissipation required for the respective heat-dissipating heat exchangers.

In the vehicular temperature control system according to the present invention, it is favorable that the liquid heating device includes, as the heater, a plurality of heater portions arranged in series along the flow direction and each branching path of the first to n-th branching paths includes a pump. It is possible to selectively supply, to respective heat-dissipating heat exchangers, liquid heat media with more appropriate amounts of heat and more appropriate flow rates according to amounts of heat dissipation required for the respective heat-dissipating heat exchangers.

In the vehicular temperature control system according to the present invention, it is favorable that the first branching path includes a bypass path for bypassing the heat-dissipating heat exchanger and includes a distribution ratio adjusting device which adjusts a flow rate for flowing through the bypass path and a flow rate for flowing through the heat-dissipating heat exchanger. It is possible to supply, to the heat-dissipating heat exchanger arranged on the first branching path, a liquid heat medium with a more appropriate amount of heat and a more appropriate flow rate, by adjusting the flow rate for flowing through the bypass path, according to an amount of heat dissipation required for the heat-dissipating heat exchanger arranged on the first branching path.

In the vehicular temperature control system according to the present invention, it is favorable that the first flow path exit includes, along the flow direction of the flow path, first-numbered to m-th-numbered ("m" being a natural number greater than or equal to 2) first flow path exits arranged in sequence from the upstream side of the flow direction and the first branching path includes first to m-th exit paths connected to respective first flow path exits of the first-numbered to m-th-numbered first flow path exits, a confluent path which converges the first to m-th exit paths, and a mixing ratio adjusting device which, while causing the liquid heat medium to flow from the m-th exit path to the confluent path, adjusts flow rates of the liquid heat medium for flowing from the first to (m-1)th exit paths to the confluent path. It is possible to supply, to the heat-dissipating heat exchanger arranged on the first branching path, a liquid heat medium with a more appropriate amount of heat and a more appropriate flow rate, by adjusting flow rates for converging from the m-th exit path, according to an amount of heat dissipation required for the heat-dissipating heat exchanger arranged on the first branching path.

In the vehicular temperature control system according to the present invention, it is favorable that the heat-dissipating heat exchanger arranged on the first branching path is a heat exchanger for battery heating which heats a battery. It is possible to maintain a battery at an appropriate temperature in such a low-temperature environment as wintertime and, as a result, prevent the battery from decreasing in performance due to low temperature.

According to the present disclosure, it is possible to provide a vehicular temperature control system capable of supplying a liquid heat medium at an appropriate temperature depending on an amount of heat dissipation of each of a plurality of heat-dissipating heat exchangers mounted in a vehicle.

### BRIEF DESCRIPTION OF THE DRAWINGS

Fig. 1 is a planar schematic view illustrating a first example of a liquid heating device which is applied to a vehicular temperature control system according to the present embodiment.
Fig. 2 is a schematic end view taken along line A-A illustrated in Fig. 1.
Fig. 3 is a schematic end view taken along line B-B illustrated in Fig. 2.
Fig. 4 is a planar schematic view illustrating a second example of a liquid heating device which is applied to a vehicular temperature control system according to the present embodiment.
Fig. 5 is a schematic end view taken along line C-C illustrated in Fig. 4.
Fig. 6 is a schematic end view taken along line D-D illustrated in Fig. 5.
Fig. 7 is a planar schematic view illustrating a third example of a liquid heating device which is applied to a vehicular temperature control system according to the present embodiment.
Fig. 8 is a schematic end view taken along line E-E illustrated in Fig. 7.
Fig. 9 is a schematic end view taken along line F-F illustrated in Fig. 8.
Fig. 10 is a planar schematic view illustrating a fourth example of a liquid heating device which is applied to a vehicular temperature control system according to the present embodiment.
Fig. 11 is a schematic end view taken along line G-G illustrated in Fig. 10.
Fig. 12 is a schematic end view taken along line H-H illustrated in Fig. 11.
Fig. 13 is a planar schematic view illustrating a modification example of a liquid heating device in each of the first to fourth examples which is applied to a vehicular temperature control system according to the present embodiment.
Fig. 14 is a schematic perspective view illustrating a fifth example of a liquid heating device which is applied to a vehicular temperature control system according to the present embodiment.
Fig. 15 is a schematic perspective view illustrating a modification example of a liquid heating device in the fifth example which is applied to a vehicular temperature control system according to the present embodiment.
Fig. 16 is a schematic plan view illustrating an example of a tank in the liquid heating device in the fifth example which is applied to a vehicular temperature control system according to the present embodiment, and illustrates a configuration in which the number of heaters is one.
Fig. 17 is a schematic plan view illustrating an example of a tank in the liquid heating device in the fifth example which is applied to a vehicular temperature control system according to the present embodiment, and illustrates a configuration in which the number of heaters is two.
Fig. 18 is a schematic sectional view illustrating a modification example of a tank in the liquid heating device in the fifth example which is applied to a vehicular temperature control system according to the present embodiment.
Fig. 19 is a schematic block diagram illustrating a first example of a vehicular temperature control system according to the present embodiment.
Fig. 20 is a schematic block diagram illustrating a first modification example of a vehicular temperature control system in the first example according to the present embodiment.
Fig. 21 is a schematic block diagram illustrating a second modification example of a vehicular temperature control system in the first example according to the present embodiment.
Fig. 22 is a schematic block diagram illustrating a first example of a vehicular temperature control system further including a surplus heat heat-dissipating system with regard to the vehicular temperature control system illustrated in Fig. 20, and is a view used to explain a stopped state of the surplus heat heat-dissipating system.
Fig. 23 is a view used to explain an operating state of the surplus heat heat-dissipating system in the vehicular temperature control system including the surplus heat heat-dissipating system in the first example illustrated in Fig. 22.
Fig. 24 is a schematic block diagram illustrating a second example of a vehicular temperature control system further including a surplus heat heat-dissipating system with regard to the vehicular temperature control system illustrated in Fig. 20, and is a view used to explain a stopped state of the surplus heat heat-dissipating system.
Fig. 25 is a view used to explain an operating state of the surplus heat heat-dissipating system in the vehicular temperature control system including the surplus heat heat-dissipating system in the second example illustrated in Fig. 24.
Fig. 26 is a schematic block diagram illustrating a third example of a vehicular temperature control system further including a surplus heat heat-dissipating system with regard to the vehicular temperature control system illustrated in Fig. 21, and is a view used to explain a stopped state of the surplus heat heat-dissipating system.
Fig. 27 is a view used to explain an operating state of the surplus heat heat-dissipating system in the vehicular temperature control system including the surplus heat heat-dissipating system in the third example illustrated in Fig. 26.
Fig. 28 is a schematic block diagram illustrating a fourth example of a vehicular temperature control system further including a surplus heat heat-dissipating system with regard to the vehicular temperature control system illustrated in Fig. 21, and is a view used to explain a stopped state of the surplus heat heat-dissipating system.
Fig. 29 is a view used to explain an operating state of the surplus heat heat-dissipating system in the vehicular temperature control system including the surplus heat heat-dissipating system in the fourth example illustrated in Fig. 28.
Fig. 30 is a schematic block diagram illustrating a second example of a vehicular temperature control system according to the present embodiment.
Fig. 31 is a schematic block diagram illustrating a first modification example of a vehicular temperature control system in the second example according to the present embodiment.
Fig. 32 is a schematic block diagram illustrating a second modification example of a vehicular temperature control system in the second example according to the present embodiment.
Fig. 33 is a schematic block diagram illustrating a third modification example of a vehicular temperature control system in the second example according to the present embodiment.
Fig. 34 is a schematic block diagram illustrating a fourth modification example of a vehicular temperature control system in the second example according to the present embodiment.
Fig. 35 is a schematic block diagram illustrating a fifth modification example of a vehicular temperature control system in the second example according to the present embodiment.

### DESCRIPTION OF THE PREFERRED EMBODIMENTS

An embodiment of the present invention will be described below with reference to the accompanying drawings. The following embodiment to be described is equivalent to practical examples of the present invention, and the present invention is not limited to the following embodiment. Furthermore, in the present specification and drawings, constituent components with the same reference numeral or sign are assumed to represent the same one as each other. As long as advantageous effects of the present invention are exerted, the embodiment can be modified or altered in various manners.

First, some examples of a liquid heating device which is appropriately applicable to a vehicular temperature control system according to the present embodiment are described.

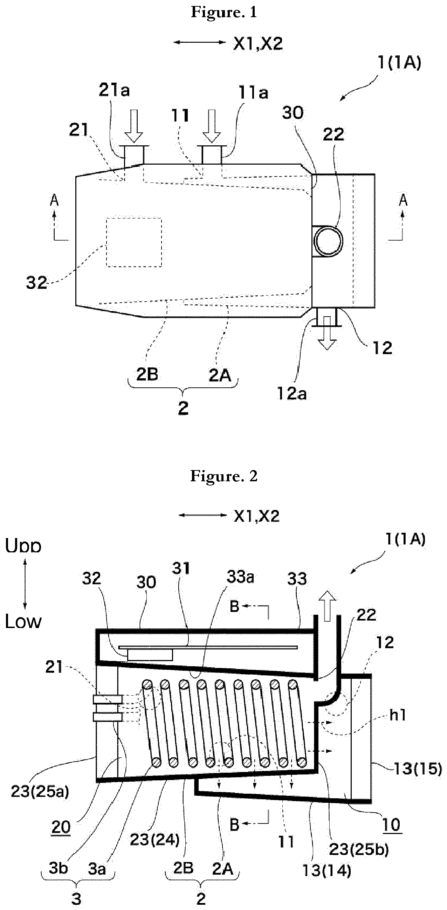

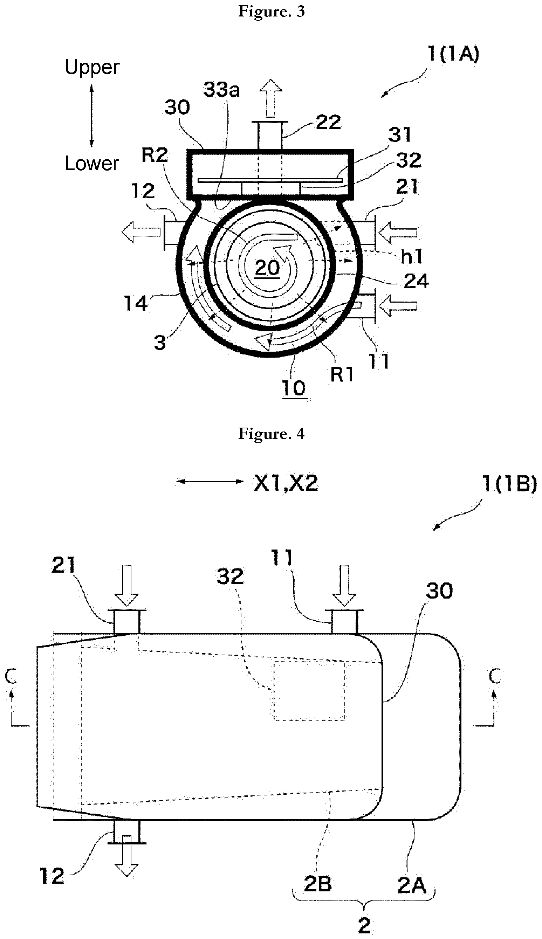

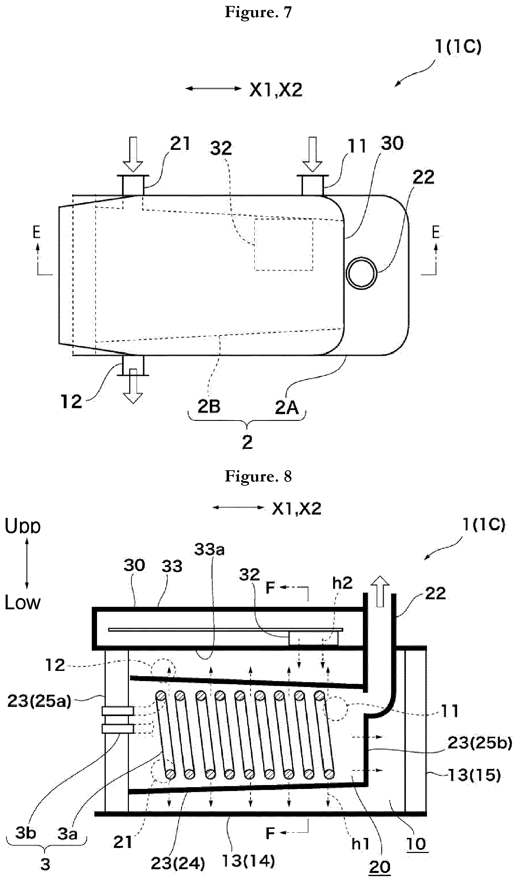

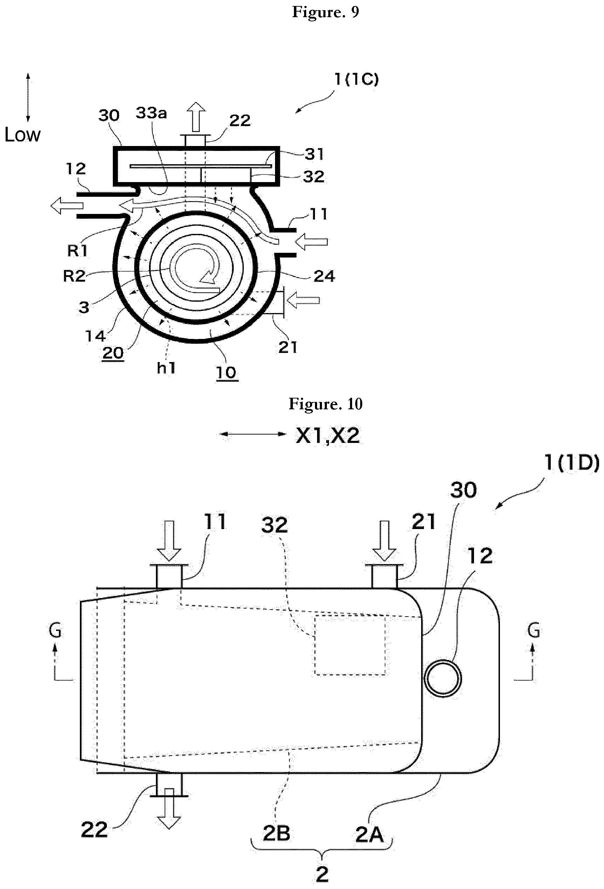

A liquid heating device 1 (1A, 1B, 1C, 1D) according to the present embodiment encompasses (includes within its scope) each of the liquid heating device 1A in a first example illustrated in Fig. 1 to Fig. 3, the liquid heating device 1B in a second example illustrated in Fig. 4 to Fig. 6, the liquid heating device 1C in a third example illustrated in Fig. 7 to Fig. 9, and the liquid heating device 1D in a fourth example illustrated in Fig. 10 to Fig. 12. The liquid heating device 1 (1A, 1B, 1C, 1D) is a device which heats a liquid heat medium and is applied to, for example, a vehicular air conditioner. The liquid heat medium is a heat medium which is liquid at room temperature and is, for example, water or coolant.

First, an overall configuration in common to the liquid heating devices 1 (1A, 1B, 1C, 1D) in the first to fourth examples according to the present embodiment is described with reference to Fig. 1 to Fig. 3 as a representative. The liquid heating device 1 (1A, 1B, 1C, 1D) according to the present embodiment includes, as illustrated in Fig. 1 to Fig. 3, a tank 2, through which a liquid heat medium flows, and a heater 3 (illustrated in Fig. 2 and Fig. 3), which heats a liquid heat medium. In the liquid heating device, the tank 2 includes a first chamber 2A and a second chamber 2B formed as a compartment separate from the first chamber 2A. The first chamber 2A includes a first flow path 10, a first flow path entrance 11, a first flow path exit 12. The second chamber 2B includes a second flow path 20, a second flow path entrance 21, and a second flow path exit 22. The second flow path 20 includes a cylindrical second side wall 24 and a pair of second end walls 25a and 25b, which occlude respective both end portions of the second side wall 24. The heater 3 is arranged inside the second flow path 20. The second flow path exit 22 is provided on a more downstream side of the second flow path 20 than the second flow path entrance 21. The first flow path 10 is adjacent to the second side wall 24. The second side wall 24, which separates the first flow path 10 and the second flow path 20 from each other, is a heat exchange wall.

It is favorable that the liquid heating device 1 (1A, 1B, 1C, 1D) further includes, as illustrated in Fig. 2, an electrical component chamber 30, which contains at least an electronic circuit board 31. The electrical component chamber 30 is provided on the upper portion of the tank 2. The electrical component chamber 30 is formed from an electrical component chamber partition wall 33. The electrical component chamber partition wall 33 includes, as a bottom portion, a compartment wall 33a, which separates the electrical component chamber 30 and the tank 2 from each other. The electronic circuit board 31, to which, for example, an electrical component such as a transistor (for example, an insulated gate bipolar transistor (IGBT)) 32 is connected, serves as a control unit which controls energization to the heater 3.

The tank 2 includes an internal space which allows a liquid heat medium to flow therethrough. The internal space is comparted into the first chamber 2A and the second chamber 2B. A liquid heat medium which flows through the first chamber 2A and a liquid heat medium which flows through the second chamber 2B are supplied in respective different channels without being mixed with each other. Comparting the inside of the tank 2 enables making respective temperatures of liquid heat media different from each other in a plurality of channels or changing respective components in liquid heat media different from each other. Specifically, one liquid heating device is able to supply a liquid heat medium at relative high temperature and a liquid heat medium at relative low temperature in two channels depending on the amounts of heat dissipation which a heat-dissipating heat exchanger requires. Moreover, for example, one liquid heating device is able to supply a liquid heat medium with relatively high electrical conductivity and a liquid heat medium with relatively low electrical conductivity in two channels depending on the property of a heat-dissipating heat exchanger.

The first chamber 2A is a low-temperature chamber which is used to generate a liquid heat medium at relatively low temperature. The first flow path 10 is surrounded by a first peripheral wall 13 as illustrated in Fig. 2, and a liquid heat medium flows through the first flow path 10 from the upstream side thereof toward the downstream side thereof. It is favorable that the first peripheral wall 13 includes a cylindrical first side wall 14 which extends in the same direction as an axial direction X2 of the second side wall 24. It is favorable that the shape of the first side wall 14 is, for example, an approximately cylindrical shape or an approximately elliptical tubular shape. In the present specification, an approximate cylinder or an approximately elliptical tube means that, without regard for details, the outer shape thereof is approximately a circular cylinder or an elliptic cylinder or is a columnar shape obtained by inclining such a circular cylinder or elliptic cylinder. The approximate cylinder or the approximately elliptical tube means not being limited to a shape the cross-section shape of which is an exact circle or an exact ellipse and means encompassing a shape the cross-section shape of which is a distorted circle or ellipse or a shape the outer shape of which is a circular truncated cone or an elliptical truncated cone with the inner diameter thereof changed relative to the central axis. Moreover, the approximate cylinder or the approximately elliptical tube encompasses a shape in which a part of the cylinder or tube is lacking, as with the first side wall 14 illustrated in Fig. 2. The first flow path entrance 11 and the first flow path exit 12 are openings which are provided at the first peripheral wall 13 and communicate with the first flow path 10, and encompass cylindrical connection portions 11a and 12a (illustrated in Fig. 1) which extend from the openings. It is favorable that the first flow path 12 is provided on a more downstream side of the first flow path 10 than the first flow path entrance 11. It is more favorable that the position of the first flow path entrance 11 and the position of the first flow path exit 12 are made to deviate from each other in an axial direction X1 of the first side wall 14, and it is particularly favorable that the first flow path entrance 11 is provided on one end portion side in the axial direction X1 of the first side wall 14 and the first flow path exit 12 is provided on the other end portion side in the axial direction X1 of the first side wall 14. It is possible to secure a longer distance over which the first flow path 10 is adjacent to the second side wall 24, and it is possible to more increase the amount of heat exchange which a liquid heat medium flowing through the first flow path 10 receives from a liquid heat medium flowing through the second flow path 20. Here, the axial direction X1 of the first side wall 14 refers to an extending direction of the first side wall 14, in other words, a longitudinal direction of a cylinder configuring the first side wall 14. It is favorable that the first flow path exit 12 is arranged at a position closer to the electrical component chamber 30 than the first flow path entrance 11. This enables preventing or reducing a liquid heat medium from remaining staying in the first flow path 10. Moreover, this enables efficiently discharging air bubbles mixed in the first flow path 10. In the first chamber 2A, a liquid heat medium flows from the first flow path entrance 11 into the first flow path 10 and then flows out from the first flow path exit 12.

The second chamber 2B is a high-temperature chamber which is used to generate a liquid heat medium at relatively high temperature. The second flow path 20 is surrounded by a second peripheral wall 23 as illustrated in Fig. 2, the heater 3 is arranged inside the second flow path 20, and a liquid heat medium flows through the second flow path 20 from the upstream side thereof toward the downstream side thereof. The second peripheral wall 23 is in the shape of a cylinder both ends of which are occluded, and includes the second side wall 24 and the pair of second end walls 25a and 25b. The second side wall 24 is a wall serving as a cylindrical side surface. It is favorable that the shape of the second side wall 24 is an approximately cylindrical shape or an approximately elliptical tubular shape. It is favorable that the second side wall 24 extends along the axial direction of the heater 3. The second end walls 25a and 25b are walls which occlude openings at both ends of the second side wall 24. The second flow path entrance 21 and the second flow path exit 22 are openings which are provided at the second peripheral wall 23 and which communicate with the second flow path 20. It is favorable that the second flow path entrance 21 and the second flow path exit 22 are provided at the second side wall 24. Particularly, it is favorable that the second flow path entrance 21 is provided at the second side wall 24. This enables causing the flow of a liquid heat medium flowing through the second flow path 20 to become a swirl flow and enables efficiently performing heat exchange with a liquid heat medium flowing through the first flow path 10. The second flow path exit 22 is provided on the more downstream side of the second flow path 20 than the second flow path entrance 21. It is more favorable that the position of the second flow path entrance 21 and the position of the second flow path exit 22 are made to deviate from each other in the axial direction X2 of the second side wall 24, and it is particularly favorable that the second flow path entrance 21 is provided on one end portion side in the axial direction X2 of the second side wall 24 and the second flow path exit 22 is provided on the other end portion side in the axial direction X2 of the second side wall 24. It is possible to secure a longer time for which a liquid heat medium flowing through the second flow path 20 is in contact with the heater 3 and to more efficiently heat the liquid heat medium. Here, the axial direction X2 of the second side wall 24 refers to the extending direction of the second side wall 24, in other words, a longitudinal direction of a cylinder configuring the second side wall 24. It is favorable that the second flow path exit 22 is arranged at a position closer to the electrical component chamber 30 than the second flow path entrance 21. This enables preventing or reducing a liquid heat medium from remaining staying in the second flow path 20. Moreover, this enables efficiently discharging air bubbles mixed in the second flow path 20. In the second chamber 2B, a liquid heat medium flows from the second flow path entrance 21 into the second flow path 20 and then flows out from the second flow path exit 22.

The heater 3 is a heater of the electric heat generation type, is not particularly limited as long as it is capable of heating a liquid heat medium by performing heat exchange therewith, and is, for example, a sheathed heater or a positive temperature coefficient (PTC) heater. The heater 3 includes a heat generation portion 3a and a terminal portion 3b. It is favorable that the heat generation portion 3a is arranged, for example, along the axial direction X2 of the second side wall 24. The shape of the heat generation portion 3a is not particularly limited, but can be a coil shape (for example, illustrated in Fig. 2), a linear shape (not illustrated), or a shape which reciprocates inside the second flow path 20 (not illustrated). The terminal portion 3b is fixed by, for example, penetrating through the second end wall 25a on one side. The terminal portion 3b is supplied with electric power via the transistor 32 such as an insulated gate bipolar transistor (IGBT). The transistor 32 controls supply of electric power to the heater 3 by performing a switching operation. This causes the temperature of the heater 3 to be adjusted to a desired level. As a result, the temperature of a liquid heat medium which is caused to flow out from the second flow path exit 22 is adjusted to a desired level.

The first flow path 10 is adjacent to the second flow path 20 via the second side wall 24. The second side wall 24, which separates the first flow path 10 and the second flow path 20 from each other, is a heat exchange wall. In the present specification, the heat exchange wall is a wall configured with a member high in thermal conductivity, and refers to a wall which allows thermal energy to migrate, via the wall, from a liquid heat medium flowing through the second flow path 20 to a liquid heat medium flowing through the first flow path 10. The material of the heat exchange wall is, for example, a metallic material such as aluminum or copper or an alloy material made from these materials. The second side wall 24 can be made into a heat exchange wall in its entirety, or only a portion of the second side wall 24 which separates the first flow path 10 and the second flow path 20 from each other can be made into a heat exchange wall. Because of the first flow path 10 being adjacent to the second flow path 20 via the heat exchange wall, for example, heat of a liquid heat medium flowing through the second flow path 20 migrates to a liquid heat medium flowing through the first flow path 10 as indicated by a dashed arrow h1 illustrated in Fig. 2, so that the liquid heat medium flowing through the first flow path 10 is warmed up. In a case where only a portion which separates the first flow path 10 and the second flow path 20 from each other is made into a heat exchange wall, the tank 2 only needs to be made from a material which has predetermined rigidity and is resistant to corrosion and impregnation caused by a heated liquid heat medium. The material of a portion other than a heat exchange wall of the tank 2 is not particularly limited, but, for example, nylon 6 or nylon 6,6 is suitably used for such a portion.

In the liquid heating device 1 (1A, 1B, 1C, 1D), the second flow path entrance 21 can be arranged at a position closer to the electrical component chamber 30 than the first flow path entrance 11, can be arranged at a position farther from the electrical component chamber 30 than the first flow path entrance 11, or can be arranged at the same position in height as the first flow path entrance 11.

It is favorable that a state in which the axial direction X2 of the second side wall 24 is arranged in an approximately horizontal direction is set as an installed condition of the liquid heating device 1 (1A, 1B, 1C, 1D). Here, the approximately horizontal direction is not particularly limited as long as there is a condition in which a connection portion between the first chamber 2A and the first flow path exit 12 or a connection portion between the second chamber 2B and the second flow path exit 22 is located almost above the tank 2, but includes the horizontal direction and the direction which falls with a range in which the magnitude of an angle to the horizon is less than or equal to 20 degrees. Arranging the liquid heating device 1 (1A, 1B, 1C, 1D) in this way enables smoothly discharging air bubbles accidentally occurring or intruding inside the tank 2. In the present specification, upper and lower directions in the above-mentioned installed condition may be said as above and below

The liquid heating device 1 (1A, 1B, 1C, 1D) according to the present embodiment acts in the following way. In the liquid heating device 1 (1A, 1B, 1C, 1D), a liquid heat medium flows through the first chamber 2A and the second chamber 2B of the tank 2. At this time, the liquid heat medium flows from the first flow path entrance 11 into the first flow path 10 and flows from the second flow path entrance 21 into the second flow path 20. The liquid heat medium having flown into the second flow path 20 is heated by the heater 3. Accordingly, the liquid heat medium heated to a predetermined temperature flows out from the second flow path exit 22. On the other hand, the liquid heat medium having flown into the first flow path 10 is warmed up by heat transfer from the liquid heat medium flowing through the second flow path 20. Accordingly, the warmed liquid heat medium flows out from the first flow path exit 12. The temperature of the liquid heat medium flowing out from the first flow path exit 12 is lower than the temperature of the liquid heat medium flowing out from the second flow path exit 22. The above-described action enables the liquid heating device 1 (1A, 1B, 1C, 1D) to supply liquid heat media at respective different temperatures in two channels.

Moreover, components can be made different between a liquid heat medium flowing through the first chamber 2A and a liquid heat medium flowing through the second chamber 2B. For example, a liquid heat medium flowing through the first chamber 2A can be set as a component low in electrical conductivity and a liquid heat medium flowing through the second chamber 2B can be set as a component high in electrical conductivity, or a liquid heat medium flowing through the first chamber 2A can be set as a component high in electrical conductivity and a liquid heat medium flowing through the second chamber 2B can be set as a component low in electrical conductivity. Alternatively, a liquid heat medium flowing through the first chamber 2A can be set as an average-grade medium with only a general component (for example, general anti-icing agent or corrosion-resistance agent) added therein and a liquid heat medium flowing through the second chamber 2B can be set as a high-grade medium with a component in which pyrolysis caused by the heater 3 is unlikely to occur added therein.

### (Liquid Heating Device in First Example)

Next, the liquid heating device 1A in the first example is described in more detail with reference to Fig. 1 to Fig. 3. The liquid heating device 1A in the first example according to the present embodiment further includes, as illustrated in Fig. 1, the electrical component chamber 30, which contains at least the electronic circuit board 31, and it is favorable that a portion in a circumferential direction of the second side wall 24 is adjacent to the electrical component chamber 30 as illustrated in Fig. 3, the first flow path 10 is adjacent to a portion which is not adjacent to the electrical component chamber 30 in the circumference direction of the second side wall 24, and is adjacent to a portion in a flow direction of the second flow path 20 as illustrated in Fig. 2, and the second flow path entrance 21 is provided at a portion to which the first flow path 10 is not adjacent of the second side wall 24.

In the liquid heating device 1A in the first example, the compartment wall 33a of the electrical component chamber partition wall 33 can be integral with the first side wall 14 and the second side wall 24 or can be separate from the first side wall 14 and the second side wall 24 and be joined to the first side wall 14 and the second side wall 24. It is more favorable from the viewpoint of formability that the compartment wall 33a of the electrical component chamber partition wall 33 is integral with the first side wall 14 and the second side wall 24. The configuration in which the compartment wall 33a is integral with the first side wall 14 and the second side wall 24 refers to a configuration in which one partition wall is also used as a part of the first side wall 14, a part of the second side wall 24, and a part of the compartment wall 33a.

In the liquid heating device 1A in the first example, a portion in the circumferential direction of the second side wall 24 serves as a portion of the compartment wall 33a or is joined to a portion of the compartment wall 33a, so that the second flow path 20 and the electrical component chamber 30 are adjacent to each other via the compartment wall 33a. In the present specification, the circumferential direction of the second side wall 24 refers to a direction along the circumference of the cylinder configuring the second side wall 24. The electrical component chamber 30 can be adjacent to the entirety in the flow direction of the second flow path 20 as illustrated in Fig. 2 or can be adjacent to a portion in the flow direction of the second flow path 20 (not illustrated).

In the liquid heating device 1A in the first example, a portion in the axial direction X2 of the second side wall 24 included in the remaining portion in the circumferential direction of the second side wall 24 is adjacent to the first flow path 10. In other words, the first flow path 10 is provided in such a way as to surround a portion in the axial direction X2 of the second side wall 24 included in a portion which is not adjacent to the electrical component chamber 30 of the second side wall 24. Then, the first chamber 2A and the second chamber 2B are provided extending from the compartment wall 33a to the lower side. The first flow path 10 is not adjacent to the upper side of the second flow path 20 but is adjacent to only the lower side thereof. This prevents the liquid heating device 1A from increasing in size. Moreover, since the first flow path 10 is not adjacent to the whole in the flow direction of the second flow path 20 but is adjacent to only a portion thereof, the liquid heating device 1A is more surely prevented from increasing in size. The range within which the first flow path 10 is adjacent to the flow direction of the second flow path 20 is not particularly limited, but it is favorable that such a range is a range of 40% to 90% of the length in the axial direction X2 of the second side wall 24. Additionally, from the viewpoints of a reduction in size and a reduction in weight, it is favorable that the range within which the first flow path 10 is adjacent to the flow direction of the second flow path 20 is a range of 40% to 70% of the length in the axial direction X2 of the second side wall 24. Alternatively, from the viewpoint of securing a large amount of heat exchange, it is favorable that the range within which the first flow path 10 is adjacent to the flow direction of the second flow path 20 is a range of 70% to 90% of the length in the axial direction X2 of the second side wall 24. As illustrated in Fig. 2, the first flow path 10 can extend to a side outer than the second end wall 25b provided at one end portion of the second side wall 24. The heat of a liquid heat medium flowing through the second flow path 20 migrates to a liquid heat medium flowing through the first flow path 10, for example, as indicated by a dashed arrow h1 illustrated in Fig. 2, so that the liquid heat medium flowing through the first flow path 10 is warmed up.

In the liquid heating device 1A in the first example, the second flow path entrance 21 is provided at a portion to which the first flow path 10 is not adjacent of the second side wall 24. Accordingly, such a manufacturing process as to penetrate through the first flow path 10 becomes unnecessary, so that it is possible to facilitate production.

In the liquid heating device 1A in the first example, it is favorable that the outer shape of the second side wall 24 is a tapered form. It is possible to more smoothly perform die cutting at the time of manufacturing.

In the liquid heating device 1A in the first example, it is favorable that, as illustrated in Fig. 3, the second flow path entrance 21 is arranged at a position closer to the electrical component chamber 30 than the first flow path entrance 11. With such a configuration employed, the flow of a liquid heat medium having flown from the first flow path entrance 11 into the first flow path 10 collides with an outer surface of the second side wall 24 (a surface facing the first flow path 10) and, then, the liquid heat medium flows along the outer surface of the second side wall 24, so that such a flow becomes a clockwise swirl flow as indicated by an arrow R1 in the cross-section illustrated in Fig. 3. On the other hand, the flow of a liquid heat medium having flown from the second flow path entrance 21 into the second flow path 20 collides with an inner surface of the second side wall 24 (a surface facing the second flow path 20) and, then, the liquid heat medium flows along the inner surface of the second side wall 24, so that such a flow becomes a counterclockwise swirl flow as indicated by an arrow R2 in the cross-section illustrated in Fig. 3. In this way, it is possible to cause the flow of a liquid heat medium in the first flow path 10 and the flow of a liquid heat medium in the second flow path 20 to become mutually opposite flows with respect to the circumferential direction of the second side wall 24. In the present specification, the mutually opposite flows mean that the flow direction of a liquid heat medium in the first flow path 10 and the flow direction of a liquid heat medium in the second flow path 20 are mutually opposite directions. Such mutually opposite flows enable more increasing the amount of heat exchange.

It is favorable that, as illustrated in Fig. 2, the first flow path exit 12 is provided at a portion, extending to a side outer in the axial direction X1 of the first side wall 14 than the second side wall 24, of the first side wall 14 and the first flow path entrance 11 is provided at an end portion, on a side opposite in the axial direction X1 of the first side wall 14 to the side on which the first flow path exit 12 is provided, of the first side wall 14. Alternatively, it is favorable that, although not illustrated, the first flow path entrance 11 is provided at the portion, extending to the side outer in the axial direction X1 of the first side wall 14 than the second side wall 24, of the first side wall 14 and the first flow path exit 12 is provided at an end portion, on a side opposite in the axial direction X1 of the first side wall 14 to the side on which the first flow path entrance 11 is provided, of the first side wall 14. These enable securing a longer distance over which the first flow path 10 is adjacent to the second side wall 24, and enable more increasing the amount of heat exchange which a liquid heat medium flowing through the first flow path 10 receives from a liquid heat medium flowing through the second flow path 20.

It is favorable that, as illustrated in Fig. 2, the second flow path entrance 21 is provided at a portion to which the first flow path 10 is not adjacent of the second side wall 24 and the second flow path entrance 22 is provided at the second end wall 25b on the side of a portion to which the first flow path 10 is adjacent. This enables securing a longer time for which a liquid heat medium flowing through the second flow path 20 is in contact with the heater 3 and enables more efficiently heating the liquid heat medium. In Fig. 2, as an example, a form configured in such a manner that the second flow path exit 22 is provided at the second end wall 25b and a liquid heat medium is caused to flow out from the second end wall 25b toward the upper side of the liquid heating device 1A while passing by the electrical component chamber 30 is illustrated.

It is favorable that the second flow path entrance 21 is provided at the portion to which the first flow path 10 is not adjacent of the second side wall 24 as illustrated in Fig. 2, the second flow path exit 22 is provided at the second end wall 25b on the side of the portion to which the first flow path 10 is adjacent, the first flow path entrance 11 is provided, although not illustrated, at the portion, extending on the side outer in the axial direction X1 of the first side wall 14 than the second side wall 24, of the first side wall 14, and the first flow path exit 12 is provided at the end portion, on the side opposite in the axial direction X1 of the first side wall 14 to the side on which the first flow path entrance 11 is provided, of the first side wall 14. With regard to the positions of the first flow path entrance 11 and the first flow path exit 12 in the above-mentioned favorable form, it is favorable that, although not illustrated in Fig. 2, the first flow path entrance 11 is provided at a portion located below the first flow path exit 12 in Fig. 2 and the first flow path exit 12 is provided above the first flow path entrance 11 in Fig. 2. This causes a high-low distribution of the temperature of a liquid heat medium in the first flow path 10 and a high-low distribution of the temperature of a liquid heat medium in the second flow path 20 to become opposite in direction. For example, in the cross-section illustrated in Fig. 2, in the first flow path 10, the temperature of a liquid heat medium is lowest at a portion on the right side and becomes higher as the portion comes closer to the left side. On the other hand, in the second flow path 20, the temperature of a liquid heat medium is lowest at a portion on the left side and becomes higher as the portion comes closer to the right side. Employing such a configuration enables more efficiently transferring the thermal energy of a liquid heat medium flowing through the second flow path 20 to a liquid heat medium flowing through the first flow path 10.

### (Liquid Heating Device in Second Example)

Next, the liquid heating device 1B in the second example is described in more detail with reference to Fig. 4 to Fig. 6. The liquid heating device 1B in the second example according to the present embodiment further includes the electrical component chamber 30, which contains at least the electronic circuit board 31, and it is favorable that the first flow path 10 is adjacent to the electrical component chamber 30 and is adjacent to a portion in the circumferential direction of the second side wall 24 and the second flow path entrance 21 is provided at a portion to which the first flow path 10 is not adjacent of the second side wall 24.

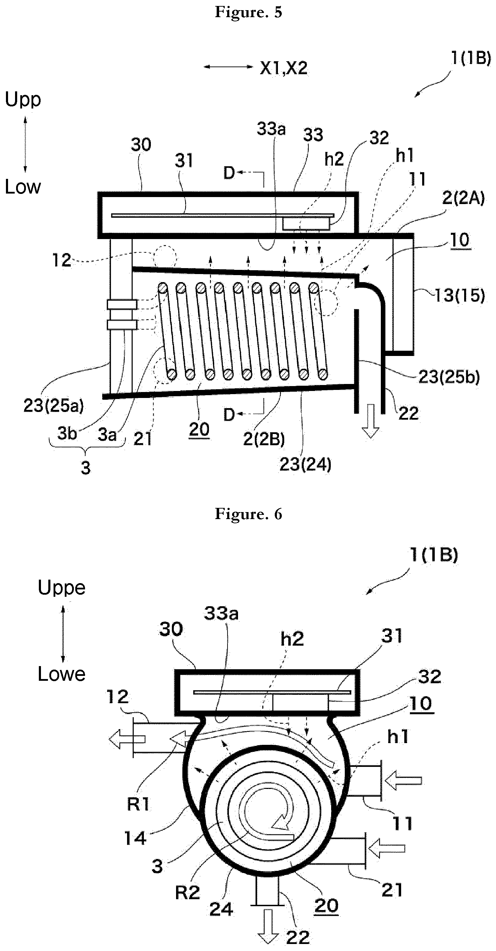

In the liquid heating device 1B in the second example, the first flow path 10 is adjacent to the electrical component chamber 30 via the compartment wall 33a. The first flow path 10 can be adjacent to the electrical component chamber 30 in the whole in the flow direction in the axial direction X1 of the first side wall 14 as illustrated in Fig. 5, or can be adjacent to the electrical component chamber 30 in a portion in the flow direction in the axial direction X1 of the first side wall 14 (not illustrated). The first flow path 10 can extend to a side outer in the axial direction X1 than the electrical component chamber 30 as illustrated in Fig. 5.

In the liquid heating device 1B in the second example, it is favorable that the electronic circuit board 31 is thermally coupled to the compartment wall 33a, which separates the first flow path 10 and the electrical component chamber 30 from each other as compartments and the compartment wall 33a is a heat exchange wall. It is more favorable that an electrical component connected to the electronic circuit board 31 is thermally coupled to the compartment wall 33a. In the present specification, being thermally coupled refers to a state in which heat is able to be transferred from one substance to the other substance and the substances to and from which heat is mutually transferred can be in a non-contact state or in a contact state. It is favorable that the electronic circuit board 31 is in a non-contact state with the compartment wall 33a. Since the electronic circuit board 31 is thermally coupled to the compartment wall 33a, heat which the electronic circuit board 31 generates is transferred to a liquid heat medium flowing through the first flow path 10, for example, as indicated by a dashed arrow h2 illustrated in Fig. 5. As a result, it is possible to facilitate heat dissipation of the electronic circuit board 31 and improve a thermal environment. On the other hand, a liquid heat medium flowing through the first flow path 10 is warmed up. The compartment wall 33a can be a heat exchange wall in its entirety or only a portion to which the first flow path 10 is adjacent of the compartment wall 33a can be a heat exchange wall. It is favorable that an electrical component, such as the transistor 32, which is connected to the electronic circuit board 31 is arranged at the upper side on the upstream side of the first flow path 10 of the electronic circuit board 31. The electrical component being thermally coupled to a lower temperature liquid heat medium of the liquid heat medium flowing through the first flow path 10 enables more efficiently dissipating heat from the electrical component. The compartment wall 33a can be integral with the first side wall 14 or can be separate from the first side wall 14 and be joined to the first side wall 14. It is more favorable from the viewpoint of formability that the compartment wall 33a is integral with the first side wall 14. The configuration in which the compartment wall 33a is integral with the first side wall 14 refers to a configuration in which one partition wall is also used as a part of the first side wall 14 and a part of the compartment wall 33a. In a case where the compartment wall 33a is separate from the first side wall 14, both the first side wall 14 and the compartment wall 33a are made into a heat exchange wall.

In the liquid heating device 1B in the second example, the first flow path 10 is provided in such a way as to surround a portion in the circumferential direction of the second side wall 24. The first flow path 10 is not adjacent to the lower side of the second flow path 20 but is adjacent to only the upper side thereof. This prevents the liquid heating device 1B from increasing in size. In the liquid heating device 1B in the second example, the first flow path 10 is adjacent to the whole in the flow direction of the second flow path 20. The heat of a liquid heat medium flowing through the second flow path 20 migrates to a liquid heat medium flowing through the first flow path 10, for example, as indicated by a dashed arrow h1 illustrated in Fig. 5, so that the liquid heat medium flowing through the first flow path 10 is warmed up.

In the liquid heating device 1B in the second example, the second flow path entrance 21 is provided at a portion to which the first flow path 10 is not adjacent of the second side wall 24. Accordingly, such a manufacturing process as to penetrate through the second flow path 20 becomes unnecessary, so that it is possible to facilitate production.

In the liquid heating device 1B in the second example, it is favorable that, as illustrated in Fig. 6, the second flow path entrance 21 is arranged at a position farther from the electrical component chamber 30 than the first flow path entrance 11. With such a configuration employed, the flow of a liquid heat medium having flown from the first flow path entrance 11 into the first flow path 10 collides with the outer surface of the second side wall 24 (a surface facing the first flow path 10) and, then, the liquid heat medium flows along the outer surface of the second side wall 24, so that such a flow becomes a counterclockwise swirl flow as indicated by an arrow R1 in the cross-section illustrated in Fig. 6. On the other hand, the flow of a liquid heat medium having flown from the second flow path entrance 21 into the second flow path 20 collides with the inner surface of the second side wall 24 (a surface facing the second flow path 20) and, then, the liquid heat medium flows along the inner surface of the second side wall 24, so that such a flow becomes a clockwise swirl flow as indicated by an arrow R2 in the cross-section illustrated in Fig. 6. In this way, it is possible to cause the flow of a liquid heat medium in the first flow path 10 and the flow of a liquid heat medium in the second flow path 20 to become mutually opposite flows with respect to the circumferential direction of the second side wall 24. Such mutually opposite flows enable more increasing the amount of heat exchange.

It is favorable that, as illustrated in Fig. 4, the first flow path exit 12 is provided at one end portion, in the axial direction X1 of the first side wall 14, of the first side wall 14 and the first flow path entrance 11 is provided at the other end portion, in the axial direction X1 of the first side wall 14, of the first side wall 14. This enables securing a longer distance over which the first flow path 10 is adjacent to the second side wall 24, and enables more increasing the amount of heat exchange which a liquid heat medium flowing through the first flow path 10 receives from a liquid heat medium flowing through the second flow path 20.

It is favorable that, as illustrated in Fig. 5, the second flow path entrance 21 is provided at a portion close to the second end wall 25a on one side of the second side wall 24 and the second flow path exit 22 is provided at the second end wall 25b on the other side of the second side wall 24. This enables securing a longer time for which a liquid heat medium flowing through the second flow path 20 is in contact with the heater 3 and enables more efficiently heating the liquid heat medium. In Fig. 5, as an example, a form configured in such a manner that the second flow path exit 22 is provided at the second end wall 25b and a liquid heat medium is caused to flow out from the second end wall 25b toward the side opposite to the side of the first flow path 10, i.e., the lower side of the liquid heating device 1B, is illustrated.

It is favorable that, as illustrated in Fig. 5, the second flow path entrance 21 is provided at the portion close to the second end wall 25a on one side of the second side wall 24, the second flow path exit 22 is provided at the second end wall 25b on the other side of the second side wall 24, the first flow path entrance 11 is provided at a portion close to the second end wall 25b of the first side wall 14, and the first flow path exit 12 is provided at an end portion, on the side opposite in the axial direction X1 of the first side wall 14 to the side on which the first flow path entrance 11 is provided, of the first side wall 14. This causes a high-low distribution of the temperature of a liquid heat medium in the first flow path 10 and a high-low distribution of the temperature of a liquid heat medium in the second flow path 20 to become opposite in direction. For example, in the cross-section illustrated in Fig. 5, in the first flow path 10, the temperature of a liquid heat medium is lowest at a portion on the right side and becomes higher as the portion comes closer to the left side. On the other hand, in the second flow path 20, the temperature of a liquid heat medium is lowest at a portion on the left side and becomes higher as the portion comes closer to the right side. Employing such a configuration enables more efficiently transferring the thermal energy of a liquid heat medium flowing through the second flow path 20 to a liquid heat medium flowing through the first flow path 10.

### (Liquid Heating Device in Third Example)

Next, the liquid heating device 1C in the third example is described in more detail with reference to Fig. 7 to Fig. 9. In the liquid heating device 1C in the third example according to the present embodiment, it is favorable that the first flow path 10 surrounds and encloses the second side wall 24 and the first flow path 10 and the second flow path 20 form a double cylinder structure.

In the liquid heating device 1C in the third example, it is favorable that the first flow path 10 is adjacent to the electrical component chamber 30 via the compartment wall 33a. The first flow path 10 can be adjacent to the electrical component chamber 30 in the whole in the flow direction in the axial direction X1 of the first side wall 14 as illustrated in Fig. 8, or can be adjacent to the electrical component chamber 30 in a portion in the flow direction in the axial direction X1 of the first side wall 14 (not illustrated). The first flow path 10 can extend to a side outer in the axial direction X1 than the electrical component chamber 30 as illustrated in Fig. 8.

In the liquid heating device 1C in the third example, it is favorable that the electronic circuit board 31 is thermally coupled to the compartment wall 33a, which separates the first flow path 10 and the electrical component chamber 30 from each other as compartments and the compartment wall 33a is a heat exchange wall. Since the electronic circuit board 31 is thermally coupled to the compartment wall 33a, heat which the electronic circuit board 31 generates is transferred to a liquid heat medium flowing through the first flow path 10, for example, as indicated by a dashed arrow h2 illustrated in Fig. 8. As a result, it is possible to facilitate heat dissipation of the electronic circuit board 31 and improve a thermal environment. On the other hand, a liquid heat medium flowing through the first flow path 10 is warmed up. The compartment wall 33a can be a heat exchange wall in its entirety or only a portion to which the first flow path 10 is adjacent of the compartment wall 33a can be a heat exchange wall. It is favorable that an electrical component, such as the transistor 32, which is connected to the electronic circuit board 31 is arranged at the upper side on the upstream side of the first flow path 10 of the electronic circuit board 31. The electrical component being thermally coupled to a lower temperature liquid heat medium of the liquid heat medium flowing through the first flow path 10 enables more efficiently dissipating heat from the electrical component. The compartment wall 33a can be integral with the first side wall 14 or can be separate from the first side wall 14 and be joined to the first side wall 14. It is more favorable from the viewpoint of formability that the compartment wall 33a is integral with the first side wall 14. The configuration in which the compartment wall 33a is integral with the first side wall 14 refers to a configuration in which one partition wall is also used as a part of the first side wall 14 and a part of the compartment wall 33a. In a case where the compartment wall 33a is separate from the first side wall 14, both the first side wall 14 and the compartment wall 33a are made into a heat exchange wall.

In the liquid heating device 1C in the third example, as illustrated in Fig. 9, the first flow path 10 surrounds and encloses the second side wall 24 and the first flow path 10 and the second flow path 20 form a double cylinder structure. The heat of a liquid heat medium flowing through the second flow path 20 migrates to a liquid heat medium flowing through the first flow path 10, for example, as indicated by a dashed arrow h1 illustrated in Fig. 8, so that the liquid heat medium flowing through the first flow path 10 is warmed up. In this way, it is possible to sufficiently transfer heat which is generated in the second chamber 2B to a liquid heat medium flowing through the first chamber 2A. In the liquid heating device 1C in the third example, the first flow path 10 is adjacent to the whole in the flow direction of the second flow path 20 in the axial direction X1 of the first side wall 14. The first flow path 10 can extend to a side outer in the axial direction X1 than the second end wall 25b, which is provided at one end portion of the second side wall 24, as illustrated in Fig. 8.

In the liquid heating device 1C in the third example, it is favorable that, as illustrated in Fig. 9 the second flow path entrance 21 is arranged at a position farther from the electrical component chamber 30 than the first flow path entrance 11. With such a configuration employed, the flow of a liquid heat medium having flown from the first flow path entrance 11 into the first flow path 10 collides with the outer surface of the second side wall 24 (a surface facing the first flow path 10) and, then, the liquid heat medium flows along the outer surface of the second side wall 24, so that such a flow becomes a counterclockwise swirl flow as indicated by an arrow R1 in the cross-section illustrated in Fig. 9. On the other hand, the flow of a liquid heat medium having flown from the second flow path entrance 21 into the second flow path 20 collides with the inner surface of the second side wall 24 (a surface facing the second flow path 20) and, then, the liquid heat medium flows along the inner surface of the second side wall 24, so that such a flow becomes a clockwise swirl flow as indicated by an arrow R2 in the cross-section illustrated in Fig. 9. In this way, it is possible to cause the flow of a liquid heat medium in the first flow path 10 and the flow of a liquid heat medium in the second flow path 20 to become mutually opposite flows with respect to the circumferential direction of the second side wall 24. Such mutually opposite flows enable more increasing the amount of heat exchange.

Moreover, in the liquid heating device 1C in the third example, although not illustrated, the second flow path entrance 21 can be arranged at a position closer to the electrical component chamber 30 than the first flow path entrance 11. With such a configuration employed, it is possible to cause the flow of a liquid heat medium in the first flow path 10 and the flow of a liquid heat medium in the second flow path 20 to become mutually opposite flows with respect to the circumferential direction of the second side wall 24. Such mutually opposite flows enable more increasing the amount of heat exchange.

It is favorable that, as illustrated in Fig. 8, the first flow path exit 12 is provided at one end portion, in the axial direction X1 of the first side wall 14, of the first side wall 14 and the first flow path entrance 11 is provided at the other end portion, in the axial direction X1 of the first side wall 14, of the first side wall 14. This enables securing a longer distance over which the first flow path 10 is adjacent to the second side wall 24, and enables more increasing the amount of heat exchange which a liquid heat medium flowing through the first flow path 10 receives from a liquid heat medium flowing through the second flow path 20.

It is favorable that, as illustrated in Fig. 8, the second flow path entrance 21 is provided at a portion close to the second end wall 25a on one side of the second side wall 24 and the second flow path exit 22 is provided at the second end wall 25b on the other side of the second side wall 24. This enables securing a longer time for which a liquid heat medium flowing through the second flow path 20 is in contact with the heater 3 and enables more efficiently heating the liquid heat medium. In Fig. 8, as an example, a form configured in such a manner that the second flow path exit 22 is provided at the second end wall 25b and a liquid heat medium is caused to pass through the first flow path 10 from the second end wall 25b and flow out toward the upper side of the liquid heating device 1C while passing by the electrical component chamber 30 is illustrated.

It is favorable that, as illustrated in Fig. 8, the second flow path entrance 21 is provided at the portion close to the second end wall 25a on one side of the second side wall 24, the second flow path exit 22 is provided at the second end wall 25b on the other side of the second side wall 24, the first flow path entrance 11 is provided at a portion close to the second end wall 25b of the first side wall 14, and the first flow path exit 12 is provided at an end portion, on the side opposite in the axial direction X1 of the first side wall 14 to the side on which the first flow path entrance 11 is provided, of the first side wall 14. This causes a high-low distribution of the temperature of a liquid heat medium in the first flow path 10 and a high-low distribution of the temperature of a liquid heat medium in the second flow path 20 to become opposite in direction. For example, in the cross-section illustrated in Fig. 8, in the first flow path 10, the temperature of a liquid heat medium is lowest at a portion on the right side and becomes higher as the portion comes closer to the left side. On the other hand, in the second flow path 20, the temperature of a liquid heat medium is lowest at a portion on the left side and becomes higher as the portion comes closer to the right side. Employing such a configuration enables more efficiently transferring the thermal energy of a liquid heat medium flowing through the second flow path 20 to a liquid heat medium flowing through the first flow path 10.

### (Liquid Heating Device in Fourth Example)

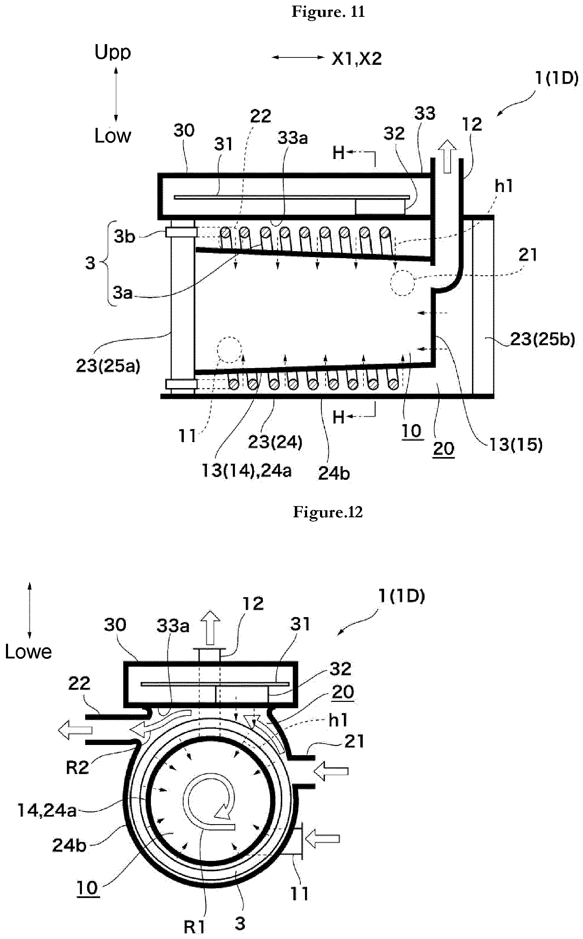

Next, the liquid heating device 1D in the fourth example is described in more detail with reference to Fig. 10 to Fig. 12. In the liquid heating device 1D in the fourth example according to the present embodiment, it is favorable that, as illustrated in Fig. 11 and Fig. 12, the second side wall 24 includes a cylindrical inner wall 24a and a cylindrical outer wall 24b provided at the outer side of the inner wall 24a, the first flow path 10 is a space inside the inner wall 24a, and the first flow path 10 and the second flow path 20 form a double cylinder structure.

In the liquid heating device 1D in the fourth example, it is favorable that the second flow path 20 is adjacent to the electrical component chamber 30 via the compartment wall 33a. The second flow path 20 can be adjacent to the electrical component chamber 30 in the whole in the flow direction in the axial direction X1 of the first side wall 14 as illustrated in Fig. 11, or can be adjacent to the electrical component chamber 30 in a portion in the flow direction in the axial direction X1 of the first side wall 14 (not illustrated). The second flow path 20 can extend to a side outer in the axial direction X1 than the electrical component chamber 30 as illustrated in Fig. 11.

In the liquid heating device 1D in the fourth example, the inner wall 24a of the second side wall 24 forms the first side wall 14 as illustrated in Fig. 12, and the second flow path 20 is configured to surround and enclose the first flow path 10. Then, the first flow path 10 and the second flow path 20 form a double cylinder structure. The heat of a liquid heat medium flowing through the second flow path 20 migrates to a liquid heat medium flowing through the first flow path 10, for example, as indicated by a dashed arrow h1 illustrated in Fig. 11, so that the liquid heat medium flowing through the first flow path 10 is warmed up. In this way, it is possible to sufficiently transfer heat which is generated in the second chamber 2B to a liquid heat medium flowing through the first chamber 2A. In the liquid heating device 1D in the fourth example, the second flow path 20 is adjacent to the whole in the flow direction of the first flow path 10 in the axial direction X1. The second flow path 20 can extend to a side outer in the axial direction X1 than the first flow path 10 as illustrated in Fig. 11. Moreover, it is favorable that, as illustrated in Fig. 12, the spiral heat generation portion 3a of the heater 3 is arranged in such a way as to surround and enclose the inner wall 24a (first side wall 14). It is possible to transfer heat of the heater 3 from the entire circumference of the inner wall 24a to a liquid heat medium flowing through the first flow path 10.

In the liquid heating device 1D in the fourth example, it is favorable that, as illustrated in Fig. 12, the second flow path entrance 21 is arranged at a position closer to the electrical component chamber 30 than the first flow path entrance 11. With such a configuration employed, the flow of a liquid heat medium having flown from the first flow path entrance 11 into the first flow path 10 collides with the inner wall 24a of the second side wall 24 and, then, the liquid heat medium flows along the inner wall 24a, so that such a flow becomes a clockwise swirl flow as indicated by an arrow R1 in the cross-section illustrated in Fig. 12. On the other hand, the flow of a liquid heat medium having flown from the second flow path entrance 21 into the second flow path 20 collides with the inner wall 24a of the second side wall 24 and, then, the liquid heat medium flows along a surface facing the outer wall 24b of the inner wall 24a, so that such a flow becomes a counterclockwise swirl flow as indicated by an arrow R2 in the cross-section illustrated in Fig. 12. In this way, it is possible to cause the flow of a liquid heat medium in the first flow path 10 and the flow of a liquid heat medium in the second flow path 20 to become mutually opposite flows with respect to a circumferential direction of the inner wall 24a of the second side wall 24. Such mutually opposite flows enable more increasing the amount of heat exchange.

Moreover, in the liquid heating device 1D in the fourth example, although not illustrated, the second flow path entrance 21 can be arranged at a position farther from the electrical component chamber 30 than the first flow path entrance 11. With such a configuration employed, it is possible to cause the flow of a liquid heat medium in the first flow path 10 and the flow of a liquid heat medium in the second flow path 20 to become mutually opposite flows with respect to the circumferential direction of the inner wall 24a of the second side wall 24. Such mutually opposite flows enable more increasing the amount of heat exchange.

It is favorable that, as illustrated in Fig. 11, the first flow path exit 12 is provided at one end portion, in the axial direction X2 of the second side wall 24, of the inner wall 24a and the first flow path entrance 11 is provided at a first end wall 15, which occludes the other end portion in the axial direction X2 of the second side wall 24, of the inner wall 24a. This enables securing a longer distance over which the first flow path 10 is adjacent to the second side wall 24, and enables more increasing the amount of heat exchange which a liquid heat medium flowing through the first flow path 10 receives from a liquid heat medium flowing through the second flow path 20. In Fig. 11, as an example, a form configured in such a manner that the first flow path exit 12 is provided at the first end wall 15, penetrates through the second flow path 20 from the first end wall 15, and causes a liquid heat medium to flow out toward the upper side of the liquid heating device 1D while passing by the electrical component chamber 30 is illustrated.

It is favorable that, as illustrated in Fig. 11, the second flow path entrance 21 is provided at a portion close to the second end wall 25b on the other side of the second side wall 24 and the second flow path exit 22 is provided at a portion close to the second end wall 25a on one side of the second side wall 24, or the second flow path entrance 21 is provided at the portion close to the second end wall 25a on one side of the second side wall 24 and the second flow path exit 22 is provided at the portion close to the second end wall 25b on the other side of the second side wall 24 (not illustrated). This enables securing a longer time for which a liquid heat medium flowing through the second flow path 20 is in contact with the heater 3 and enables more efficiently heating the liquid heat medium.

It is favorable that, as illustrated in Fig. 11, the second flow path entrance 21 is provided at the portion close to the second end wall 25b on the other side of the second side wall 24, the second flow path exit 22 is provided at the portion close to the second end wall 25a on one side of the second side wall 24, the first flow path exit 12 is provided at the other end portion in the axial direction X2 of the second side wall 24 of the inner wall 24a, and the first flow path entrance 11 is provided at the first end wall 15, which occludes one end portion in the axial direction X2 of the second side wall 24 of the inner wall 24a. This causes a high-low distribution of the temperature of a liquid heat medium in the first flow path 10 and a high-low distribution of the temperature of a liquid heat medium in the second flow path 20 to become opposite in direction. For example, in the cross-section illustrated in Fig. 11, in the first flow path 10, the temperature of a liquid heat medium is lowest at a portion on the left side and becomes higher as the portion comes closer to the right side. On the other hand, in the second flow path 20, the temperature of a liquid heat medium is lowest at a portion on the right side and becomes higher as the portion comes closer to the left side. Employing such a configuration enables more efficiently transferring the thermal energy of a liquid heat medium flowing through the second flow path 20 to a liquid heat medium flowing through the first flow path 10.

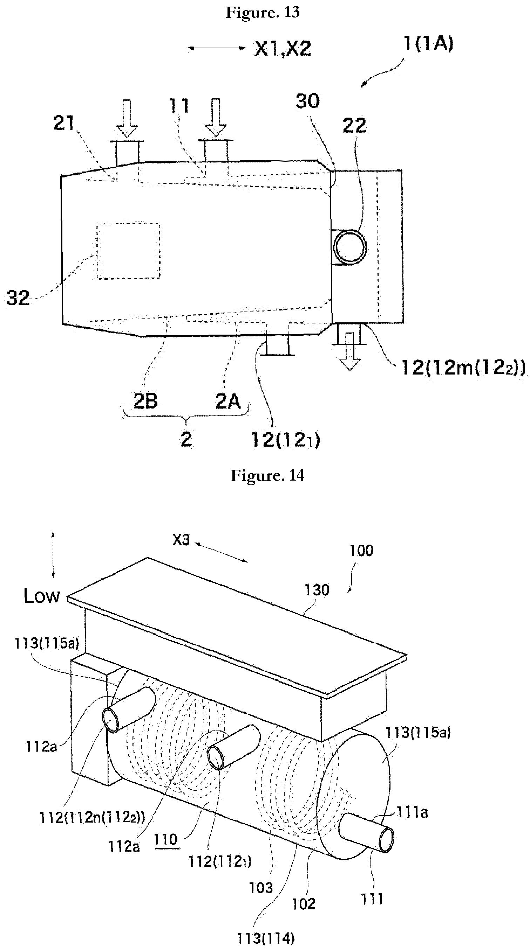

While, up to here, examples of the embodiment of the liquid heating device 1 (1A, 1B, 1C, 1D) have been described with reference to Fig. 1 to Fig. 12, these are illustrated merely as examples, and the present invention is not limited to only such configurations. The present invention encompasses various modified configurations as long as advantageous effects of the present invention are exerted. As one example in the modified configurations, the liquid heating device 1 (1A, 1B, 1C, 1D) can include a plurality of first flow path exits 12. Fig. 13 is a schematic plan view illustrating a modification example of a liquid heating device. While, in Fig. 13, a modification example of the liquid heating device 1A in the first example illustrated in Fig. 1 to Fig. 3 is illustrated as a representative, the liquid heating devices 1B, 1C, and 1D in the second to fourth examples illustrated in Fig. 4 to Fig. 12 can also be modified in similar ways. In the liquid heating device 1 (1A, 1B, 1C, 1D) according to the present embodiment, it is favorable that, as illustrated in Fig. 13, the first flow path exit 12 includes first-numbered to m-th-numbered ("m" being a natural number greater than or equal to 2) first flow path exits 12₁ to 12ₘ arranged along the flow direction of the first flow path 10 in sequence from the upstream side in the flow direction. While Fig. 13 illustrates, as an example, a configuration in which "m" is 2, i.e., a configuration in which the first flow path exit 12 includes a first-numbered first flow path exit 12₁ and a second-numbered first flow path exit 12₂, the present invention is not limited to this and "m" can be greater than or equal to 3. At this time, it is favorable that the first-numbered first flow path exit 12₁ is located between the first flow path entrance 11 and the m-th-numbered first flow path exit 12ₘ in the flow direction of the first flow path 10. The first-numbered to m-th-numbered ("m" being a natural number greater than or equal to 2) first flow path exits 12₁ to 12ₘ can be arranged on the same straight line extending in the axial direction X1 of the first side wall 14 or can be arranged on different straight lines extending in the axial direction X1 of the first side wall 14.

In a case where the first flow path exit 12 includes first-numbered to m-th-numbered ("m" being a natural number greater than or equal to 2) first flow path exits 12 (12₁ to 12ₘ) arranged along the flow direction of the first flow path 10 in sequence from the upstream side in the flow direction, with regard to temperatures of liquid heat media to be discharged from the respective first flow path exits 12, the temperature of a liquid heat medium which flows out from the first-numbered first flow path exit 12 (12i) arranged at the most upstream side of the first flow path 10 becomes lowest and the temperature of a liquid heat medium which flows out from the m-th-numbered first flow path exit 12 (12ₘ) arranged at the most downstream side of the first flow path 10 becomes highest. This enables the liquid heating device 1 (1A, 1B, 1C, 1D) to supply liquid heat media at respective different temperatures in two channels and adjust the temperatures of liquid heat media which flow out from the first flow path exits 12 (12₁ to 12ₘ) according to a target temperature.

### (Liquid Heating Device in Fifth Example)

Fig. 14 is a schematic perspective view illustrating an example of a liquid heating device according to the present embodiment. A liquid heating device 100 according to the present embodiment includes, as illustrated in Fig. 14, a tank 102, through which a liquid heat medium flows, and a heater 103, which heats a liquid heat medium. In the liquid heating device 100, the tank 102 includes one flow path 110, at least one flow path entrance 111, and a plurality of flow path exits 112 (112₁ to 112ₙ). The heater 103 is arranged inside the flow path 110. The plurality of flow path exits 112 (112₁ to 112ₙ) includes first to n-th flow path exits ("n" being a natural number greater than or equal to 2) arranged along a flow direction of the flow path 110 in sequence from the upstream side in the flow direction. The first flow path exit 112₁ is located between the flow path entrance 111 and the n-th flow path exit 112, in the flow direction.

The liquid heating device 100 according to the present embodiment is a device which heats a liquid heat medium and is applied to, for example, a vehicular air conditioner. The liquid heat medium is a heat medium which is liquid at room temperature and is, for example, water or coolant.

It is favorable that, as illustrated in Fig. 14, the liquid heating device 100 further includes an electrical component chamber 130 which contains at least an electronic circuit board. The electrical component chamber 130 is provided on the upper portion of the tank 102. The electronic circuit board, to which an electrical component such as a transistor (for example, an IGBT)) is connected, serves as a control unit which controls energization of the heater 103.

The tank 102 includes one internal space through which a liquid heat medium is allowed to flow, and the internal space serves as the flow path 110. The flow path 110 is surrounded by a peripheral wall 113, and the heater 103 is arranged inside the internal space, through which a liquid heat medium flows from the upstream side toward the downstream side. The material of the peripheral wall 113 only needs to be a material which has predetermined rigidity and is resistant to corrosion and impregnation caused by a heated liquid heat medium, and is not particularly limited, but, for example, nylon 6 or nylon 6,6 is suitably used for such a material. This enables a reduction in weight of the liquid heating device 100. Alternatively, an aluminum alloy is suitably used for the material of the peripheral wall 113. This enables sufficiently securing the rigidity of the liquid heating device 100. It is favorable that the peripheral wall 113 is in the form of a cylinder both ends of which are occluded, and the peripheral wall 113 includes a cylindrical side wall 114 and a pair of end walls 115a and 115b. The shape of the side wall 114 is not particularly limited, but it is favorable that the shape of the side wall 114 is, for example, an approximately cylindrical shape or an approximately elliptical tubular shape. In the present specification, an approximate cylinder or an approximately elliptical tube means that, without regard for details, the outer shape thereof is approximately a circular cylinder or an elliptic cylinder or is a columnar shape obtained by inclining such a circular cylinder or elliptic cylinder. The approximate cylinder or the approximately elliptical tube means not being limited to a shape the cross-section shape of which is an exact circle or an exact ellipse and means encompassing a shape the cross-section shape of which is a distorted circle or ellipse or a shape the outer shape of which is a circular truncated cone or an elliptical truncated cone with the inner diameter thereof changed relative to the central axis. Moreover, the shape of the side wall 114 encompasses a shape in which a part of the cylinder or tube is lacking.

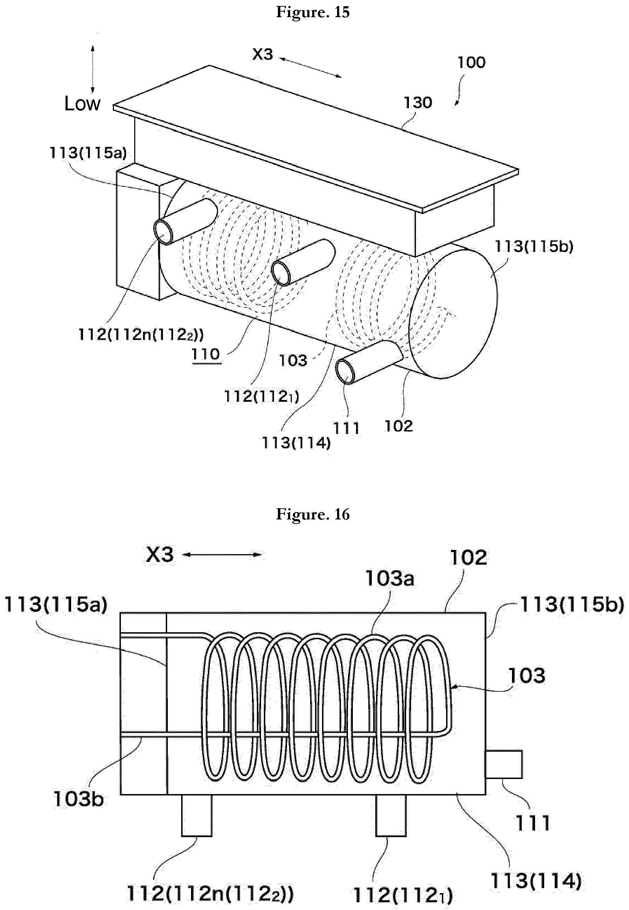

The flow path entrance 111 and the flow path exits 112 (112₁ to 112ₙ) are openings which are provided at the peripheral wall 113 and communicate with the flow path 110, and encompass cylindrical connection portions 111a and 112a (illustrated in Fig. 14) extending from the openings. It is favorable that the flow path exits 112 (112₁ to 112ₙ) are arranged at positions closer to the electrical component chamber 130 than the flow path entrance 111. In this way, arranging the flow path entrance 111 at the lower side and the flow path exits 112 (112₁ to 112ₙ) at the upper side enables efficiently discharging air bubbles mixed into the flow path 110 at the time of installation or at the time of maintenance. While Fig. 14 illustrates, as an example, a configuration in which the flow path entrance 111 is provided at the end wall 115b and the flow path exits 112 (112₁ to 112ₙ) are provided at the side wall 114, the present invention is not limited to this, and, for example, as illustrated in Fig. 15, both the flow path entrance 111 and the flow path exits 112 (112₁ to 112ₙ) can be provided at the side wall 114. Providing the flow path entrance 111 at the side wall 114 as illustrated in Fig. 15 enables causing the flow of a liquid heat medium flowing through the flow path 110 to become a swirl flow flowing along an inner surface of the side wall 114, and enables more efficiently heating the liquid heat medium.

The plurality of flow path exits 112 (112₁ to 112ₙ) includes the first flow path exit 112₁, the second flow path exit 112₂, ..., and the n-th flow path exit 112ₙ arranged along the flow direction of the flow path 110 in sequence from the upstream side in the flow direction. The number "n" is a natural number greater than or equal to 2, and, while Fig. 14 illustrates, as an example, a configuration in which "n" is 2, the present invention is not limited to this and "n" can be greater than or equal to 3. In the configuration illustrated in Fig. 14, the flow path exit 112 on the upstream side is the first flow path exit 112₁, and the flow path exit 112 on the downstream side is the second flow path exit 112₂. Here, being arranged along the flow direction of the flow path 110 refers to the first flow path exit 112₁, ..., and the n-th flow path exit 112ₙ lining up in sequence from the upstream side toward the downstream side of the flow path 110 in the order of "n" from smallest to largest. The first flow path exit 112₁ is arranged between the flow path entrance 111 and the n-th flow path exit 112, in the flow direction. This enables moderately heating a liquid heat medium which is caused to flow out from the first flow path exit 112₁. It can also be said that it is possible not to excessively heat a liquid heat medium which is caused to flow out from the first flow path exit 112₁. It is favorable that the flow path exits 112 (112₁ to 112ₙ) are provided on a more downstream side of the flow path 110 than the flow path entrance 111. It is more favorable to cause the position of the flow path entrance 111 and the position of the flow path exit 112 to deviate from each other in an axial direction X3 of the side wall 114, and it is particularly favorable to provide the flow path entrance 111 at one end portion side in the axial direction X3 of the side wall 114 and provide the n-th flow path exit 112, at the other end portion side in the axial direction X3 of the side wall 114. It is possible to secure a long flow path 110. Here, the axial direction X3 of the side wall 114 refers to an extending direction of the side wall 114, in other words, a longitudinal direction of a cylinder configuring the side wall 114.

Fig. 16 is a schematic plan view illustrating an example of a tank in the liquid heating device according to the present embodiment, and illustrates a configuration in which the number of heaters is one. Fig. 16 illustrates a part of the side wall 114 in such a see-through manner that the inside of the tank 102 is viewable. The heater 103 is a heater of the electric heat generation type, is not particularly limited as long as it is capable of heating a liquid heat medium by performing heat exchange therewith, and is, for example, a sheathed heater or a PTC heater. The heater 103 includes a heat generation portion 103a and a terminal portion 103b. It is favorable that the heat generation portion 103a is arranged, for example, along the axial direction X3 of the side wall 114. The shape of the heat generation portion 103a is not particularly limited, but can be a coil shape as illustrated in Fig. 16, a linear shape (not illustrated), or a shape which reciprocates inside the flow path 110 (not illustrated). The terminal portion 103b is fixed by, for example, penetrating through the end wall 115a. The terminal portion 103b is supplied with electric power via a transistor such as an insulated gate bipolar transistor (IGBT). The transistor controls supply of electric power to the heater 103 by performing a switching operation. This causes the temperature of the heater 103 to be adjusted to a desired level. As a result, the temperatures of liquid heat media which are caused to flow out from the respective flow path exits 112 (112₁ to 112ₙ) are adjusted to respective desired levels.

It is favorable that a state in which the axial direction X3 of the side wall 114 is arranged in an approximately horizontal direction is set as an installed condition of the liquid heating device 100. Here, the approximately horizontal direction is not particularly limited as long as there is a condition in which a connection portion between the side wall 114 and the flow path exits 112 (112₁ to 112ₙ) is located almost above the tank 102, but includes the horizontal direction and the direction which falls with a range in which the magnitude of an angle to the horizon is less than or equal to 20 degrees. Arranging the liquid heating device 100 in this way enables smoothly discharging air bubbles accidentally occurring or intruding inside the tank 102. In the present specification, upper and lower directions in the above-mentioned installed condition may be said as above and below

The liquid heating device 100 according to the present embodiment acts in the following way. In the liquid heating device 100, a liquid heat medium flows through the tank 102. At this time, the liquid heat medium flows from the flow path entrance 111 into the flow path 110. The liquid heat medium having flown into the flow path 110 is heated by the heater 103 and is then caused to flow out in sequence from the respective flow path exits 112 (112₁ to 112ₙ) on the upstream side. The temperature of a liquid heat medium tends to become higher as coming closer to the downstream side of the flow path 110. The liquid heating device 100 according to the present embodiment utilizing this tendency to arrange the flow path exits 112 (112₁ to 112ₙ) along the flow direction of the flow path 110 in sequence from the upstream side in the flow direction enables causing temperatures of liquid heat media caused to flow out from the respective flow path exits 112 (112₁ to 112ₙ) to become temperatures different from each other. More specifically, with regard to temperatures of liquid heat media to be discharged from the respective flow path exits 112 (112₁ to 112ₙ), the temperature of a liquid heat medium which flows out from the first flow path exit 112₁ arranged at the most upstream side of the flow path 110 becomes lowest and the temperature of a liquid heat medium which flows out from the n-th flow path exit 112ₙ arranged at the most downstream side of the flow path 110 becomes highest. In the description taking a configuration in which "n" is 2 as an example, a part of a liquid heat medium having flown into the flow path 110 is caused to flow out from the first flow path exit 112₁, and the remainder of the liquid heat medium flows to the more downstream side of the flow path 110 than the first flow path exit 112₁ and is then caused to flow out from the second flow path exit 112₂. The temperature of a liquid heat medium flowing out from the first flow path exit 112₁ is lower than the temperature of a liquid heat medium flowing out from the second flow path exit 112₂. The above-described action enables the liquid heating device 100 to supply liquid heat media at respective different temperatures from one flow path 110.

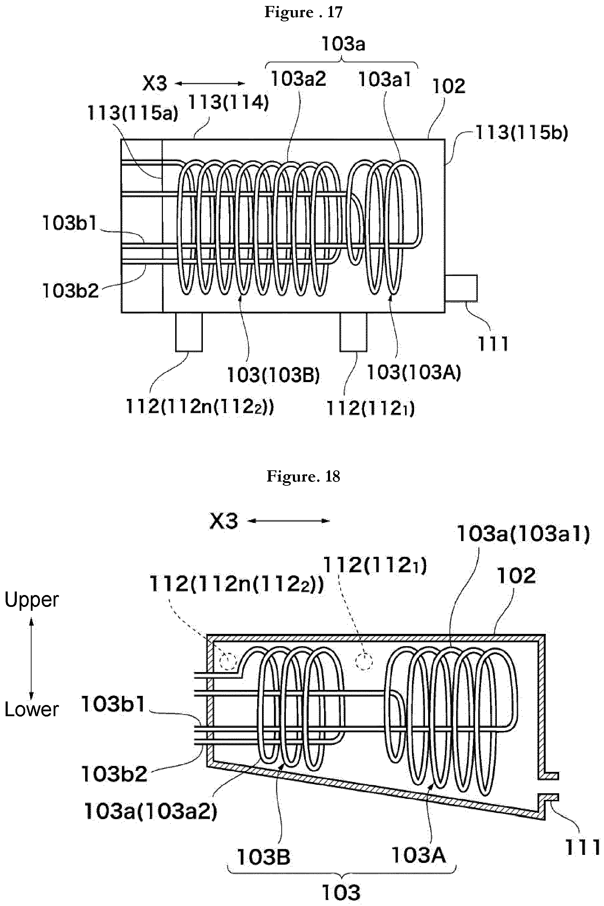

Fig. 17 is a schematic plan view illustrating an example of a tank in the liquid heating device according to the present embodiment, and illustrates a configuration in which the number of heaters is two. Fig. 17 illustrates a part of the side wall 114 in such a see-through manner that the inside of the tank 102 is viewable. The liquid heating device 100 according to the present embodiment includes, as the heater 103, a plurality of heater portions 103a1 and 103a2 arranged in series along the flow direction, and it is favorable that the plurality of heater portions 103a1 and 103a2 includes a first heater portion 103a1 and a second heater portion 103a2 arranged in sequence from the upstream side in the flow direction.

An example of a configuration in which the heater includes the plurality of heater portions is described with reference to Fig. 17. The liquid heating device 100 according to the present embodiment includes a plurality of heaters 103A and 103B as illustrated in Fig. 17, and it is favorable that the plurality of heaters 103A and 103B includes a heater 103A, which includes a first heat generation portion as the first heater portion 103a1 and a first terminal portion 103b1 for sending electric power to the first heat generation portion, and a heater 103B, which includes a second heat generation portion as the second heater portion 103a2 and a second terminal portion 103b2 for sending electric power to the second heat generation portion, the first heater portion 103a1 generates heat by being supplied with electric power from the first terminal portion 103b1, and the second heater portion 103a2 generates heat by being supplied with electric power from the second terminal portion 103b2. While Fig. 17 illustrates a configuration in which the number of heaters 103 is two, the present invention is not limited to this, and the number of heaters 103 can be greater than or equal to 3. In this way, the plurality of heater portions 103a1 and 103a2 is configured as heat generation portions of heaters 103A and 103B different from each other and the supply of electric power to the respective heaters 103A and 103B is controlled, so that it is possible to perform more precise temperature control. For example, it is possible to perform the following control. In a case where a somewhat high temperature is required as the temperature of a liquid heat medium caused to flow out from the first flow path exit 112₁ and a temperature higher than the temperature of a liquid heat medium caused to flow out from the first flow path exit 112₁ is required as the temperature of a liquid heat medium caused to flow out from the n-th flow path exit 112ₙ, electric power is supplied to both the first heater 103A and the second heater 103B. This enables causing the amount of heat which is given to a liquid heat medium caused to flow out from the first flow path exit 112₁ to become, for example, 2 kilowatt-hour (kW/h) and causing the amount of heat which is given to a liquid heat medium caused to flow out from the n-th flow path exit 112, to become, for example, 5 kW/h. Moreover, in a case where it is required to cause the temperature of a liquid heat medium caused to flow out from the first flow path exit 112₁ and the temperature of a liquid heat medium caused to flow out from the n-th flow path exit 112, to become the same level, electric power is supplied to only the first heater 103A and the supply of electric power to the second heater 103B is stopped. This enables causing the amount of heat which is given to a liquid heat medium caused to flow out from the first flow path exit 112₁ to become, for example, 1 kW/h and causing the amount of heat which is given to a liquid heat medium caused to flow out from the n-th flow path exit 112, to become, for example, 1 kW/h. Alternatively, in a case where a somewhat low temperature is required as the temperature of a liquid heat medium caused to flow out from the first flow path exit 112₁ and a somewhat high temperature is required as the temperature of a liquid heat medium caused to flow out from the n-th flow path exit 112ₙ, the supply of electric power to the first heater 103A is stopped and electric power is supplied to only the second heater 103B. This enables causing the amount of heat which is given to a liquid heat medium caused to flow out from the first flow path exit 112₁ to become, for example, 0.7 kW/h and causing the amount of heat which is given to a liquid heat medium caused to flow out from the n-th flow path exit 112, to become, for example, 2.5 kW/h.

In a case where a plurality of heater portions is arranged, the amounts of heat generation of the respective heaters 103A and 103B (heater portions 103a1 and 103a2) can be set individually as appropriate. For example, the amounts of heat generation of the respective heaters 103A and 103B (heater portions 103a1 and 103a2) can be set as respective different amounts of heat generation, or the amounts of heat generation of the respective heaters 103A and 103B (heater portions 103a1 and 103a2) can be set as the same amount of heat generation. In a case where the amounts of heat generation of the respective heaters 103A and 103B (heater portions 103a1 and 103a2) are set as respective different amounts of heat generation, the combination of the alignment sequence and the large and small relationship of the heaters 103A and 103B (heater portions 103a1 and 103a2) arranged along the flow direction of the flow path 110 is not particularly limited, and, for example, a heater portion with a larger amount of heat generation as coming closer to the upstream side can be arranged or a heater portion with a smaller amount of heat generation as coming closer to the upstream side can be arranged. Alternatively, a heater portion with a relatively small amount of heat generation can be arranged between heater portions with relatively large amounts of heat generation, or a heater portion with a relatively large amount of heat generation can be arranged between heater portions with relatively small amounts of heat generation.

In the liquid heating device 100 according to the present embodiment, it is favorable that the amount of heat generation of the first heater portion 103a1 is larger than the amount of heat generation of the second heater portion 103a2. The present embodiment is not limited to the flow rate of a liquid heat medium and the temperature of a liquid heat medium illustrated in the following description, and the flow rate of a liquid heat medium and the temperature of a liquid heat medium can be set as appropriate. The first heater portion 103a1 takes care of temperature rising of all of the liquid heat media having flown in from the flow path entrance 111, for example, at a flow rate of 10 liters per minute (L/min) and, for example, at a temperature of 30 degree Celsius (°C). Then, a part of the liquid heat medium heated to, for example, 60 °C by the first heater portion 103a1 flows out from the first flow path exit 112₁, for example, at a flow rate of 3 L/min. The second heater portion 103a2 takes care of further temperature rising of a remaining liquid heat medium which has been caused to rise in temperature by the first heater portion 103a1 and which has not flown out from the first flow path exit 112₁. The liquid heat medium heated by the second heater portion 103a2 is caused to rise in temperature up to 90 °C and then flows out from the second flow path exit 112₂, for example, at a flow rate of 7 L/min. Thus, in the present configuration, since the first heater portion 103a1 takes care of temperature rising of a liquid heat medium at a flow rate of 10 L/min and at a temperature difference of 30 °C, the amount of heat which the first heater portion 103a1 supplies to the liquid heat medium becomes 300 L·°C/min. Moreover, since the second heater portion 103a2 takes care of temperature rising of a liquid heat medium at a flow rate of 7 L/min and at a temperature difference of 30 °C, the amount of heat which the second heater portion 103a2 supplies to the liquid heat medium becomes 210 L·°C/min. Accordingly, the amount of heat generation of the heater portion (second heater portion) 103a2 arranged at the downstream side is made smaller than the amount of heat generation of the heater portion (first heater portion) 103a1 arranged at the upstream side, so that it is possible to perform more electric power saving.

As in the liquid heating device 100 according to the present embodiment illustrated in Fig. 17, the first heater portion 103a1 and the second heater portion 103a2 are heat generation portions of the individual heaters 103A and 103B each arranged in the flow path 110, and it is favorable that the heaters 103A and 103B include the respective terminal portions 103b1 and 103b2, each of which is fixed by penetrating through one of the end walls 115a and 115b, and electric power is supplied to each of the terminal portions 103b1 and 103b2. This enables performing more precise temperature control.

In the liquid heating device 100 according to the present embodiment, it is favorable that, as illustrated in Fig. 17, the first flow path exit 112₁ is provided at the side wall 114 of the tank 102 surrounding a boundary region including a boundary between the first heater portion 103a1 and the second heater portion 103a2 and a region adjacent to the boundary. With this configuration, the temperature of a liquid heat medium caused to flow out from the first flow path exit 112₁ in a case where the flow rate of the liquid heat medium stays constant is determined uniquely by the amount of heat generation of the first heater portion 103a1, so that it is possible to perform more precise temperature control. The boundary region is, for example, a portion which includes the downstream end of the first heater portion 103a1, a portion which includes the upstream end of the second heater portion 103a2, or a portion adjacent to the first heater portion 103a1 of the second heater portion 103a2.

While Fig. 14 to Fig. 17 illustrate a configuration in which the vertical cross-sectional area obtained by traversing the tank 102 vertically is approximately constant along the flow direction of the flow path 110, the vertical cross-sectional area of the tank 102 can be inconstant along the flow direction of the flow path 110. Fig. 18 is a schematic sectional view illustrating a modification example of a tank in the liquid heating device according to the present embodiment. Fig. 18 illustrates not a cross-section of the heater 103 but a state in which the front of the tank 102 is viewed. In the liquid heating device 100 according to the present embodiment, it is favorable that the vertical cross-sectional area obtained by traversing the tank 102 vertically becomes smaller as coming closer to the downstream side of the flow path 110. This enables attaining a reduction in size and a reduction in weight of the liquid heating device. It is more favorable that the vertical cross-sectional area of the tank 102 at positions corresponding to the first flow path exit 112₁ to the second flow path exit 112₂ is smaller than the vertical cross-sectional area of the tank 102 at positions corresponding to the flow path entrance 111 to the first flow path exit 112₁. In the tank 102, a region from the first flow path exit 112₁ to the second flow path exit 112₂ is smaller in the flow rate of a liquid heat medium than a region from the flow path entrance 111 to the first flow path exit 112₁. Making the cross-sectional area of the tank 102 smaller in conformity with the flow rate of a liquid heat medium enables more efficiently heating the liquid heat medium and enables attaining a reduction in size and a reduction in weight of the liquid heating device. It is more favorable that a configuration in which, as illustrated in Fig. 18, the vertical cross-sectional area obtained by traversing the tank 102 vertically becomes smaller as coming closer to the downstream side of the flow path 110, the heater 103 includes the plurality of heater portions 103a1 and 103a2 arranged in series along the flow direction, and the plurality of heater portions 103a1 and 103a2 includes the first heater portion 103a1 and the second heater portion 103a2 arranged in sequence from the upstream side in the flow direction is employed. It is further favorable that a configuration in which, as illustrated in Fig. 18, the first flow path exit 112₁ is provided at the side wall 114 of the tank 102 surrounding the boundary region including the boundary between the first heater portion 103a1 and the second heater portion 103a2 and the region adjacent to the boundary is employed.

While, up to here, configurations in which the liquid heating device 100 includes two flow path exits 112 have been described as examples, these are illustrated merely as examples, and the present invention is not limited to only such configurations. The present invention encompasses various modified configurations as long as advantageous effects of the present invention are exerted. One example in the modified configurations is a configuration in which the liquid heating device 100 includes, as the plurality of flow path exits 112, the first flow path exit 112₁, the second flow path exit 112₂, and a third flow path exit 112₃ arranged in sequence from the upstream side in the flow direction and the plurality of heaters 103 includes the first heater portion, the second heater portion, and a third heater portion arranged in sequence from the upstream side in the flow direction. In this configuration, it is favorable that the amount of heat generation of the first heater portion is larger than the amount of heat generation of the second heater portion and the amount of heat generation of the second heater portion is larger than the amount of heat generation of the third heater portion. Moreover, it is favorable that the first flow path exit 112₁ is provided at the side wall 114 of the tank 102 surrounding a boundary region including a boundary between the first heater portion and the second heater portion and a region adjacent to the boundary and the second flow path exit 112₂ is provided at the side wall 114 of the tank 102 surrounding a boundary region including a boundary between the second heater portion and the third heater portion and a region adjacent to the boundary.

While Fig. 17 illustrates, as an example of a configuration in which the heater includes a plurality of heater portions, a configuration in which the liquid heating device 100 includes a plurality of heaters 103A and 103B and respective heat generation portions of the plurality of heaters 103A and 103B are the plurality of heater portions 103a1 and 103a2, the present invention is not limited to this, and, for example, a configuration in which the liquid heating device 100 includes the single heater 103 as illustrated in Fig. 16, the single heater 103 includes a plurality of heat generation regions (not illustrated) along the flow direction, and the plurality of heat generation regions is set as the plurality of heater portions 103a1 and 103a2 can be employed. Thus, when another example of a configuration in which the heater includes a plurality of heater portions is described with reference to Fig. 16, it is favorable that the liquid heating device 100 according to the present embodiment includes the single heater 103, the single heater 103 includes the plurality of heat generation regions (not illustrated) arranged along the flow direction and the terminal portion 103b for sending electric power to the plurality of heat generation regions, the plurality of heat generation regions includes the first heater portion and the second heater portion, and the first heater portion and the second heater portion generate heat by being supplied with electric power from the terminal portion 103b. This enables attaining a liquid heating device which has been prevented from being complicated in structure and control. The method of providing the plurality of heat generation regions in the single heater 103 is not particularly limited, but is a method of forming a heat generation distribution by varying the density of heat generation lines in a single heat generator or a method of interconnecting a plurality of heat generators different from each other in the amount of heat generation. Although not illustrated, when one example of another modified configuration is described with reference to Fig. 17, it is favorable that the first heater portion 103a1 is a first heat generation portion arranged in the flow path 110 and includes a connected portion (not illustrated) instead of the first terminal portion 103b1 illustrated in Fig. 17, the second heater portion 103a2 is a second heat generation portion arranged in the flow path 110 and includes a connection portion electrically connected to the connected portion of the first heater portion 103a1 and the terminal portion 103b2 fixed by penetrating through one of the end walls 115a and 115b, and electric power is supplied to the terminal portion 103b2. In this way, the first heater portion 103a1 and the second heater portion 103a2 are interconnected in a series manner and electric power is supplied to the second heater portion 103a2, so that electric power is also supplied to the first heater portion 103a1. Since the number of terminal portions is not increased and the number of terminal portions penetrating through the end wall of the tank 102 is not increased, it is possible to manufacture a liquid heating device without complicating the structure of the end wall.

Next, a vehicular temperature control system is described.

A vehicular temperature control system according to the present embodiment includes a liquid heat medium circuit, in which a liquid heat medium circulates, a liquid heating device, which performs temperature control on the liquid heat medium, and a plurality of heat-dissipating heat exchangers, which dissipates heat from the liquid heat medium, wherein the liquid heating device includes a tank, through which the liquid heat medium flows, and a heater, which heats the liquid heat medium, wherein the tank includes at least one flow path, at least one flow path entrance, and a plurality of flow path exits, wherein the heater is arranged inside one flow path of the at least one flow path, wherein the plurality of flow path exits includes first to n-th flow path exits ("n" being a natural number greater than or equal to 2), wherein the liquid heat medium flowing out from the first flow path exit is relatively lower in temperature than the liquid heat medium flowing out from the n-th flow path exit, wherein the liquid heat medium circuit includes first to n-th branching paths connected to respective flow path exits serving as the first to n-th flow path exits, and wherein the plurality of heat-dissipating heat exchangers is arranged on respective branching paths serving as the first to n-th branching paths.

The liquid heat medium circuit is a flow path to which at least a liquid heating device and a heat-dissipating heat exchanger are connected and which circulates a liquid heat medium.

The liquid heating device only needs to be a device capable of sullying liquid heat media at respective different temperatures and is not particularly limited, but it is favorable that the liquid heating device is any one of the liquid heating devices 1 (1A to 1D) in the first to fourth examples illustrated in Fig. 1 to Fig. 13 or the liquid heating device 100 in the fifth example illustrated in Fig. 14 to Fig. 18.

The heat-dissipating heat exchanger is a device capable of dissipating heat from a liquid heat medium heated by the liquid heating device and is a device which heats, by heat dissipation, an object to be heated. Examples of a plurality of heat-dissipating heat exchangers include a heat exchanger for heating (heater core) which warms up air to be sent into a vehicle interior as an object to be heated, a heat exchanger for battery heating which warms up a battery as an object to be heated, a heat exchanger for floor heating which warms up the floor of a vehicle as an object to be heated, and a heat exchanger for seat heating which warms up a vehicle seat as an object to be heated.

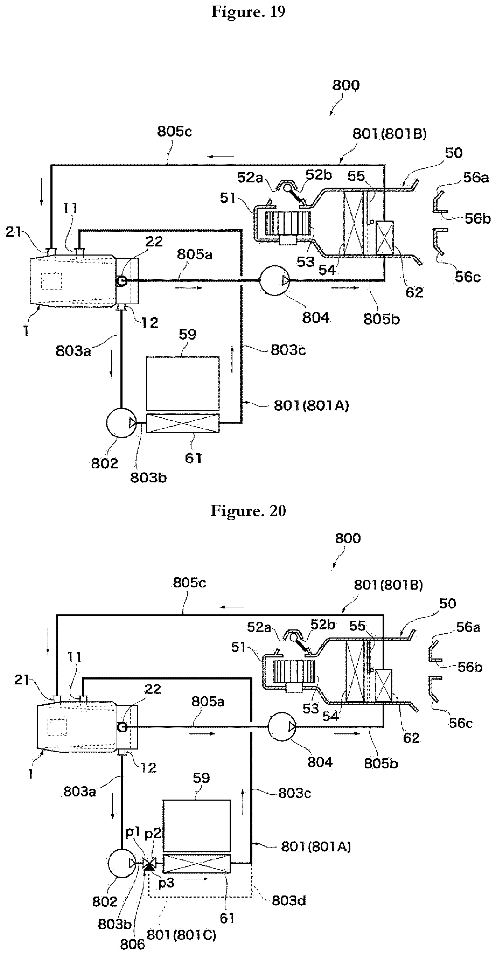

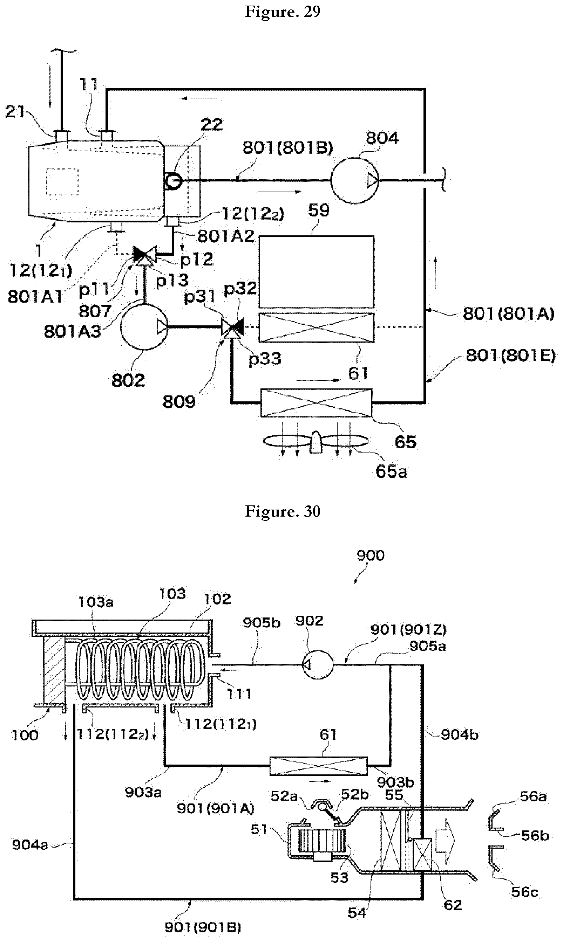

The vehicular temperature control system according to the present embodiment is a system which supplies liquid heat media at respective appropriate temperatures according to the amounts of heat dissipation respectively required for a plurality of heat-dissipating heat exchangers mounted in a vehicle, by using a liquid heating device capable of supplying liquid heat media at a plurality of respective different temperatures from one device. The vehicular temperature control system according to the present embodiment encompasses a vehicular temperature control system 800 in a first example (illustrated in Fig. 19 to Fig. 29) to which any one of the liquid heating devices 1 (1A to 1D) in the first to fourth examples illustrated in Fig. 1 to Fig. 13 is applied and a vehicular temperature control system 900 in a second example (illustrated in Fig. 30 to Fig. 35) to which the liquid heating devices 100 in the fifth example illustrated in Fig. 14 to Fig. 18 is applied.

A vehicle may include a plurality of heat-dissipating heat exchangers mounted therein and the required amounts of heat dissipation may be different depending on objects to be heated serving as targets for heating. For example, when the heat-dissipating heat exchangers mentioned above as examples are used for description as examples, while, for the heater core, a larger amount of heat dissipation is required, a smaller amount of heat dissipation may be enough for the heat exchanger for battery heating, the heat exchanger for floor heating, or the heat exchanger for seat heating. Alternatively, while, for the heater core, heat dissipation is required for a relatively long time, heat dissipation for a relatively short time may be enough for the heat exchanger for battery heating. The inventors of the present invention have completed the invention of a liquid heating device capable of supplying liquid heat media at a plurality of respective different temperatures from one device such as the liquid heating devices 1 (1A to 1D) in the first to fourth examples illustrated in Fig. 1 to Fig. 13 and the liquid heating devices 100 in the fifth example illustrated in Fig. 14 to Fig. 18. Then, the inventors have found out that applying such a liquid heating device to a vehicular temperature control system enables supplying liquid heat media at respective appropriate temperatures according to the amounts of heat dissipation respectively required for a plurality of heat-dissipating heat exchangers mounted in a vehicle, without complicating the system and control.

### (Vehicular Temperature Control System in First Example)

First, a vehicular temperature control system in the first example is described with reference to Fig. 19 to Fig. 21.

The liquid heating device which is applied to the vehicular temperature control system in the first example is one of the liquid heating devices 1 (1A to 1D) in the first to fourth examples illustrated in Fig. 1 to Fig. 13. Thus, in the vehicular temperature control system 800 in the first example, with regard to the liquid heating device 1 (1A, 1B, 1C, 1D), it is favorable that, as illustrated in Fig. 1 to Fig. 13, the tank 2 includes the first chamber 2A and the second chamber 2B formed as a compartment separate from the first chamber 2A, the first chamber 2A includes the first flow path 10 as a flow path, the first flow path entrance 11 as a flow path entrance, and the first flow path exit 12, the second chamber 2B includes the second flow path 20 as a flow path, the second flow path entrance 21 as a flow path entrance, and the second flow path exit 22 as an n-th flow path exit, the second flow path 20 includes the cylindrical second side wall 24 and the pair of second end walls 25a and 25b, which occlude respective both end portions of the second side wall 24, the heater 3 is arranged inside the second flow path 20, the second flow path exit 22 is provided on the more downstream side of the second flow path 20 than the second flow path entrance 21, the first flow path 10 is adjacent to the second side wall 24, and the second side wall 24, which separates the first flow path 10 and the second flow path 20 from each other, is a heat exchange wall. Applying such the liquid heating device 1 (1A, 1B, 1C, 1D) enables supplying liquid heat media at respective different temperatures in two channels.

In the vehicular temperature control system 800 in the first example, a liquid heat medium circuit 801 includes, as illustrated in Fig. 19, n independent circulation circuits according to the number n of flow path exits, and, for example, in a case where the number n of a plurality of flow path exits is 2, the liquid heat medium circuit 801 includes a first branching path 801A and a second branching path 801B as two independent circulation circuits.

With regard to the first branching path 801A, it is favorable that at least the liquid heating device 1, a first pump 802, and a first heat-dissipating heat exchanger 61 are interconnected in order via warm water pipes 803a to 803c.

The first pump 802 is a device which pumps a liquid heat medium inside the first branching path 801A, and Fig. 19 illustrates, as an example, a configuration in which the first pump 802 is arranged between the first flow path exit 12 of the liquid heating device 1 and an inflow port of the first heat-dissipating heat exchanger 61. Although not illustrated, the first pump 802 can be arranged between an outflow port of the first heat-dissipating heat exchanger 61 and the first flow path entrance 11 of the liquid heating device 1.

The first heat-dissipating heat exchanger 61 is a device which includes the inflow port, a flow path, and the outflow port for a liquid heat medium and which dissipates heat from a liquid heat medium flowing in the inside thereof. It is favorable that the first heat-dissipating heat exchanger 61 is a heat exchanger for battery heating which heats a battery 59. The battery 59 is, for example, a battery for driving which is mounted in an electric vehicle (EV) or a plug-in hybrid vehicle (PHV). A liquid heat medium flowing out from the first flow path exit 12 is at relatively low temperature and is, therefore, able to moderately warm up the battery 59. Accordingly, it is possible to promptly raise the temperature of the battery 59 up to an appropriate temperature in a low-temperature environment such as wintertime, and, as a result, it is possible to secure the charge-discharge performance of a battery even in a low-temperature environment. Moreover, the first heat-dissipating heat exchanger 61 can be, for example, a heat exchanger for floor heating or a heat exchanger for seat heating which warms up a vehicle seat.

With regard to the second branching path 801B, it is favorable that at least the liquid heating device 1, a second pump 804, and a second heat-dissipating heat exchanger 62 are interconnected in order via warm water pipes 805a to 805c.

The second pump 804 is a device which pumps a liquid heat medium inside the second branching path 801B, and Fig. 19 illustrates, as an example, a configuration in which the second pump 804 is arranged between the second flow path exit 22 of the liquid heating device 1 and an inflow port of the second heat-dissipating heat exchanger 62. Although not illustrated, the second pump 804 can be arranged between an outflow port of the second heat-dissipating heat exchanger 62 and the second flow path entrance 21 of the liquid heating device 1.

The second heat-dissipating heat exchanger 62 is a device which includes the inflow port, a flow path, and the outflow port for a liquid heat medium and which dissipates heat from a liquid heat medium flowing in the inside thereof. It is favorable that the second heat-dissipating heat exchanger 62 is a heat exchanger the required amount of heat dissipation is relatively larger than that of the first heat-dissipating heat exchanger 61, and the second heat-dissipating heat exchanger 62 is, for example, a heater core which performs temperature control on air to be sent into a vehicle interior. A liquid heat medium flowing out from the second flow path exit 22 is at relatively high temperature and is, therefore, able to efficiently warm up air to be sent into a vehicle interior.

The heater core 62 (second heat-dissipating heat exchanger 62) is mounted in a vehicular air conditioner 50. The vehicular air conditioner 50 includes, for example, a case 51 which includes an air passageway, and, in the case 51, a blower 53, an evaporator 54, an air-mix door 55, and the heater core 62 are contained. On the most upstream portion of the case 51, an outside air intake 52a and an inside air intake 52b are formed as openings, and, when the blower 53 is driven, air is pulled in from the outside air intake 52a and/or the inside air intake 52b, so that airflow occurs in the air passageway. Air flowing through the air passageway is dehumidified or cooled by the evaporator 54 as appropriate, is caused to pass through the heater core 62 as appropriate according to the degree of opening of the mix-air door 55, and is heated by heat exchange with a liquid heat medium flowing inside the heater core 62. Then, the air subjected to temperature control is sent into a vehicle interior from at least one of a defrost opening portion 56a, a vent opening portion 56b, and a foot opening portion 56c, which are formed as openings at the most downstream portion of the case 51.

The vehicular temperature control system 800 in the first example according to the present embodiment acts in the following way. In the first branching path 801A, a liquid heat medium is subjected to temperature control in the first chamber 2A of the liquid heating device 1 and is then supplied from the first flow path exit 12 to the first heat-dissipating heat exchanger 61 through the warm water pipes 803a and 803b. In the first heat-dissipating heat exchanger 61, the heat of a liquid heat medium is used for heating of an object to be heated (for example, the battery 59), so that heat is dissipated from the liquid heat medium. The liquid heat medium from which heat has been dissipated flows from the first flow path entrance 11 of the liquid heating device 1 into the first chamber 2A through the warm water pipe 803c and is then subjected to temperature control again. On the other hand, in the second branching path 801B, a liquid heat medium is subjected to temperature control in the second chamber 2B of the liquid heating device 1 and is then supplied from the second flow path exit 22 to the second heat-dissipating heat exchanger 62 through the warm water pipes 805a and 805b. In the second heat-dissipating heat exchanger 62, the heat of a liquid heat medium is used for heating of an object to be heated (for example, air to be sent into a vehicle interior), so that heat is dissipated from the liquid heat medium. The liquid heat medium from which heat has been dissipated flows from the second flow path entrance 21 of the liquid heating device 1 into the second chamber 2B through the warm water pipe 805c and is then subjected to temperature control again. At this time, the temperature of a liquid heat medium which is supplied from the first flow path exit 12 to the first heat-dissipating heat exchanger 61 is lower than the temperature of a liquid heat medium which is supplied from the second flow path exit 22 to the second heat-dissipating heat exchanger 62. The above-described action enables the vehicular temperature control system 800 in the first example to supply liquid heat media at respective appropriate temperatures according to the amounts of heat dissipation respectively required for a plurality of heat-dissipating heat exchangers mounted in a vehicle. More specifically, the vehicular temperature control system 800 is able to supply a liquid heat medium with an amount of heat of, for example, 2 kW/h from the first flow path exit 12 to the first heat-dissipating heat exchanger (for example, a heat exchanger for battery heating) 61 and supply a liquid heat medium with an amount of heat of, for example, 5 kW/h from the second flow path exit 22 to the second heat-dissipating heat exchanger (for example, a heater core) 62.

Fig. 20 is a schematic block diagram illustrating a first modification example of the vehicular temperature control system in the first example according to the present embodiment. In the vehicular temperature control system 800 in the first example according to the present embodiment, it is favorable that, as illustrated in Fig. 20, the first branching path 801A includes a bypass path 801C for bypassing the first heat-dissipating heat exchanger 61 and further includes a distribution ratio adjusting device 806 which adjusts a flow rate for flowing through the bypass path 801C and a flow rate for flowing through the first heat-dissipating heat exchanger 61.

The bypass path 801C is a flow path configured with a warm water pipe 803d, which connects the warm water pipe 803b, which connects the first pump 802 and the inflow port of the first heat-dissipating heat exchanger 61, or the warm water pipe 803a, which connects the first flow path exit 12 and the first pump 802, and the warm water pipe 803c, which connects the outflow port of the first heat-dissipating heat exchanger 61 and the first flow path entrance 11, and configures a part of the liquid heat medium circuit 801.

The distribution ratio adjusting device 806 is, for example, a distribution valve. It is favorable that the distribution valve includes, for example, a first port p1 as an entrance port, a second port p2 as an exit port connected to a warm water pipe connected to the inflow port of the first heat-dissipating heat exchanger 61, and a third port p3 as an exit port connected to the bypass path 801C. In Fig. 20, three triangles representing the distribution ratio adjusting device 806 represent the respective ports p1, p2, and p3 of the distribution valve, in which a filled triangle (in Fig. 20, p3) indicates a state in which the port has been shut off and an unfilled triangle (in Fig. 20, p1 and p2) indicates a state in which the port has been connected. In the distribution ratio adjusting device 806, the degrees of opening of the respective exit ports p2 and p3 are controlled by a control unit (not illustrated), so that the flow rate for flowing through the bypass path 801C and the flow rate for flowing through the first heat-dissipating heat exchanger 61 are adjusted. The first port p1 can be opened at all times or can be controlled to be opened and closed by the control unit (not illustrated).

By being equipped with the bypass path 801C and the distribution ratio adjusting device 806, the vehicular temperature control system 800 in the first example acts in the following way. When the temperature of a liquid heat medium having flown out from the first flow path exit 12 is lower than a target temperature or equal to the target temperature, the control unit (not illustrated) controls the distribution ratio adjusting device 806 to make the second port p2 opened and make the third port p3 closed. This causes the entire amount of a liquid heat medium having flown out from the first flow path exit 12 to flow through the first heat-dissipating heat exchanger 61. Here, the target temperature is a temperature which is set depending on the amount of heat dissipation required for the first heat-dissipating heat exchanger 61, in other words, the amount of heating which an object to be heated by heat dissipation of the first heat-dissipating heat exchanger 61 requires. Moreover, the temperature of a liquid heat medium having flown out from the first flow path exit 12 is, for example, a temperature detected by a temperature sensor (not illustrated) provided near the distribution ratio adjusting device 806 in the warm water pipe 803b. The time when the temperature of a liquid heat medium having flown out from the first flow path exit 12 is lower than the target temperature or equal to the target temperature is the time when an object to be heated is in a low-temperature state, thus requiring heating, and the amount of heat dissipation required for the first heat-dissipating heat exchanger 61 is large. At a time like this, causing a larger amount of liquid heat medium to flow into the first heat-dissipating heat exchanger 61 to increase the amount of heat dissipation at the first heat-dissipating heat exchanger 61 enables efficiently heating an object to be heated (for example, the battery 59). On the other hand, when the temperature of a liquid heat medium having flown out from the first flow path exit 12 is higher than the target temperature, the control unit (not illustrated) controls the distribution ratio adjusting device 806 to make the second port p2 and the third port p3 opened. This causes a liquid heat medium having flown out from the first flow path exit 12 to be distributed to the first heat-dissipating heat exchanger 61 and the bypass path 801C. The time when the temperature of a liquid heat medium having flown out from the first flow path exit 12 is higher than the target temperature is the time when an object to be heated has been warmed up, thus not much requiring heating or requiring no heating, and the amount of heat dissipation required for the first heat-dissipating heat exchanger 61 is small. At a time like this, distributing a liquid heat medium to the bypass path 801C to reduce the flow rate of a liquid heat medium flowing to the first heat-dissipating heat exchanger 61 and decrease the amount of heat dissipation at the first heat-dissipating heat exchanger 61 enables preventing excessive heating of an object to be heated (for example, the battery 59). At this time, it is favorable that, as the temperature of a liquid heat medium having flown out from the first flow path exit 12 is higher, the control unit (not illustrated) performs control to make the degree of opening of the second port p2 smaller and make the degree of opening of the third port p3 larger. This enables more decreasing the flow rate of a liquid heat medium flowing through the first heat-dissipating heat exchanger 61, thus reducing the amount of heat dissipation. When heating of an object to be heated is not required, the control unit (not illustrated) can perform control to make the second port p2 closed and make the third port p3 opened. As described above, by being equipped with the bypass path 801C and the distribution ratio adjusting device 806, the vehicular temperature control system 800 in the first example adjusts the flow rate for flowing to the bypass path 801C according to the amount of heat dissipation required for the first heat-dissipating heat exchanger 61 arranged on the first branching path 801A, thus being able to supply a liquid heat medium with a more appropriate amount of heat and a more appropriate flow rate to the first heat-dissipating heat exchanger 61 arranged on the first branching path 801A.

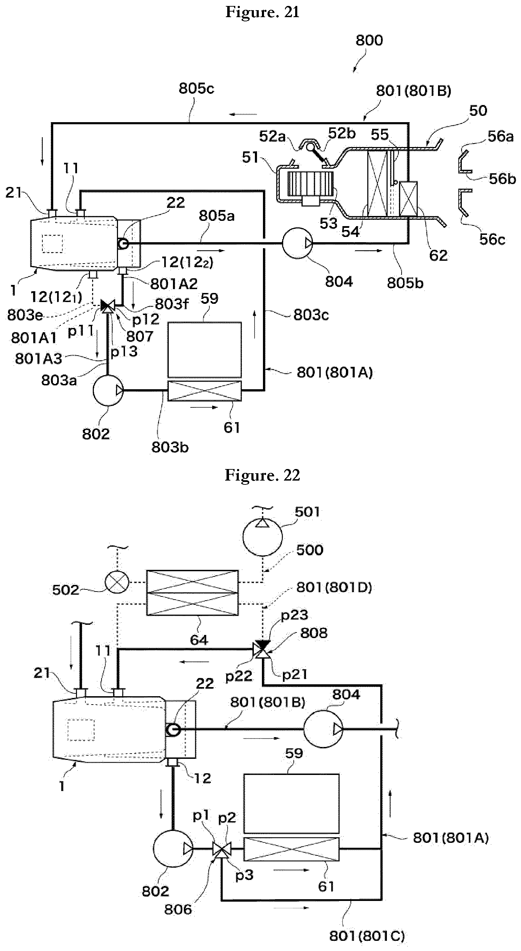

Fig. 21 is a schematic block diagram illustrating a second modification example of the vehicular temperature control system in the first example according to the present embodiment. In the vehicular temperature control system 800 in the first example according to the present embodiment, it is favorable that the first flow path exit 12 includes, as illustrated in Fig. 21, the first-numbered to m-th-numbered ("m" being a natural number greater than or equal to 2, and, in Fig. 21, a configuration in which "m" is 2 being illustrated as an example) first flow path exits 12₁ and 12₂ arranged along the flow direction of the flow path in sequence from the upstream side in the flow direction, and the first branching path 801A includes first to m-th exit paths 801A1 and 801A2, which are connected to respective first flow path exits of the first-numbered to m-th-numbered first flow path exits 12₁ and 12z, a confluent path 801A3, which converges the first to m-th exit paths 801A1 and 801A2, and a mixing ratio adjusting device 807, which, while causing a liquid heat medium to flow from the m-th exit path 801A2 to the confluent path 801A3, adjusts flow rates of the liquid heat medium for flowing from the first to (m-1)th exit paths 801A1 to the confluent path 801A3.

To the liquid heating device 1 illustrated in Fig. 21, the liquid heating device 1 (1A) illustrated in Fig. 13 can be applied. While, in Fig. 21, a configuration in which, as an example, "m" is 2, the first-numbered to m-th-numbered first flow path exits are the first-numbered first flow path exit 12₁ and the second-numbered first flow path exit 12z, and the first to m-th exit paths are the first exit path 801A1 and the second exit path 801A2 is illustrated, the present invention is not limited to this, and "m" can be greater than or equal to 3. In a case where "m" is greater than or equal to 3, the first-numbered to m-th-numbered first flow path exits can be the first-numbered first flow path exit 12₁, the second-numbered first flow path exit 12₂, the third-numbered first flow path exit (not illustrated), ..., and the m-th-numbered first flow path exit (not illustrated), and the first to m-th exit paths can be the first exit path 801A1, the second exit path 801A2, the third exit path (not illustrated), ..., and the m-th exit path (not illustrated).

The first to m-th exit paths 801A1 and 801A2 are flow paths which are configured with warm water pipes 803e and 803f connected to the respective first-numbered to m-th-numbered first flow path exits 12₁ and 12₂, and configure a part of the first branching path 801A.

The confluent path 801A3 is a flow path which converges the first to m-th exit paths 801A1 and 801A2, is configured with the warm water pipe 803a, and configures a part of the first branching path 801A.

The mixing ratio adjusting device 807 is, for example, a mixing valve. It is favorable that the mixing valve includes, for example, a first port p11, which is connected to the first exit path 801A1 as an entrance port, a second port p12, which is connected to the second exit path 801A2 as an entrance port and is opened at all times, and a third port p13, which is connected to the confluent path 801A3 as an exit port and is opened at all times. In Fig. 21, three triangles representing the mixing ratio adjusting device 807 represent the respective ports p11, p12, and p13 of the mixing valve, in which a filled triangle (in Fig. 21, p11) indicates a state in which the port has been shut off and an unfilled triangle (in Fig. 21, p12 and p13) indicates a state in which the port has been connected. Fig. 21 illustrates a configuration in which, as an example, the mixing valve includes the three ports p11, p12, and p13. The second port p12 and the third port p13 are opened at all times, and a liquid heat medium having flow out from the m-th-numbered first flow path exit 12ₘ (12z) always circulates inside the first branching path 801A. This enables, while the temperature of a liquid heat medium flowing out from the m-th-numbered first flow path exit 12₂ may become a high temperature, preventing such a high-temperature liquid heat medium from remaining staying in the liquid heating device 1, to more improve safety. In the mixing ratio adjusting device 807, the degree of opening of the entrance port p11 is controlled by a control unit (not illustrated), so that the flow rate of a liquid heat medium flowing out from the first-numbered first flow path exit 12₁ and then flowing through the confluent path 801A3 is adjusted. Moreover, the control unit (not illustrated) can be configured to control, in addition to the degree of opening of the entrance port p11, the degree of opening of the entrance port p12. This enables adjusting the ratio between the flow rate of a liquid heat medium flowing from the second exit path 801A2 and the flow rate of a liquid heat medium flowing from the first exit path 801A1, which are caused to flow through the confluent path 801A3, and enables performing more precise temperature control.

By being equipped with the first to m-th exit paths 801A1 and 801A2 and the mixing ratio adjusting device 807, the vehicular temperature control system 800 in the first example acts in the following way. When the temperature of a liquid heat medium having flown out from the m-th-numbered first flow path exit 12₂ is lower than a target temperature or equal to the target temperature, the control unit (not illustrated) controls the mixing ratio adjusting device 807 to make the first port p11 closed and make the second port p12 and the third port p13 opened. This causes the entire amount of a liquid heat medium flowing through the confluent path 801A3 to derive from a liquid heat medium having flown out from the m-th-numbered first flow path exit 12₂, so that a liquid heat medium sufficiently heated in the first chamber 2A flows through the first heat-dissipating heat exchanger 61. Here, the target temperature is a temperature which is set depending on the amount of heat dissipation required for the first heat-dissipating heat exchanger 61, in other words, the amount of heating which an object to be heated by heat dissipation of the first heat-dissipating heat exchanger 61 requires. Moreover, the temperature of a liquid heat medium having flown out from the m-th-numbered first flow path exit 12₂ is, for example, a temperature detected by a temperature sensor (not illustrated) provided near the m-th-numbered first flow path exit 12₂. The time when the temperature of a liquid heat medium having flown out from the m-th-numbered first flow path exit 12₂ is lower than the target temperature or equal to the target temperature is the time when an object to be heated is in a low-temperature state, thus requiring heating, and the amount of heat dissipation required for the first heat-dissipating heat exchanger 61 is large. At a time like this, causing only a liquid heat medium flowing out from the m-th-numbered first flow path exit 12₂ to flow into the first heat-dissipating heat exchanger 61 to increase the amount of heat dissipation at the first heat-dissipating heat exchanger 61 enables efficiently heating an object to be heated (for example, the battery 59). On the other hand, when the temperature of a liquid heat medium having flown out from the m-th-numbered first flow path exit 12₂ is higher than the target temperature, the control unit (not illustrated) controls the mixing ratio adjusting device 807 to make the first port p11, the second port p12, and the third port p13 opened. This causes a liquid heat medium flowing through the confluent path 801A3 to derive from a mixed liquid heat medium obtained by mixing a liquid heat medium having flown out from the m-th-numbered first flow path exit 12₂ with a liquid heat medium having flown out from the first-numbered first flow path exit 12₁, so that a liquid heat medium at a temperature lower than that in a case where the entire amount of a liquid heat medium flowing through the confluent path 801A3 is only a liquid heat medium having flown out from the m-th-numbered first flow path exit 12₂ flows through the first heat-dissipating heat exchanger 61. The time when the temperature of a liquid heat medium having flown out from the m-th-numbered first flow path exit 12₂ is higher than the target temperature is the time when an object to be heated has been warmed up, thus not much requiring heating or requiring no heating, and the amount of heat dissipation required for the first heat-dissipating heat exchanger 61 is small. At a time like this, mixing a liquid heat medium having flown out from the m-th-numbered first flow path exit 12₂ with a liquid heat medium having flown from the first-numbered first flow path exit 12₁ to lower the temperature of a liquid heat medium flowing to the first heat-dissipating heat exchanger 61 and decrease the amount of heat dissipation at the first heat-dissipating heat exchanger 61 enables preventing excessive heating of an object to be heated (for example, the battery 59). At this time, it is favorable that, as the temperature of a liquid heat medium having flown out from the m-th-numbered first flow path exit 12₂ is higher, the control unit (not illustrated) performs control to make the degree of opening of the first port p11 larger and make the degree of opening of the second port p12 smaller. This causes the ratio of a liquid heat medium having flown out from the m-th-numbered first flow path exit 12₂ in a mixed liquid heat medium flowing through the confluent path 801A3 to increase, thus more decreasing the temperature of a liquid heat medium flowing through the first heat-dissipating heat exchanger 61. As a result, it is possible to reduce the amount of heat dissipation at the first heat-dissipating heat exchanger 61. As described above, by being equipped with the first to m-th exit paths 801A1 and 801A2 and the mixing ratio adjusting device 807, the vehicular temperature control system 800 in the first example adjusts the flow rate of a liquid heat medium having flown out from the m-th-numbered first flow path exit 12₂, which is to be mixed with a liquid heat medium having flown out from the first-numbered first flow path exit 12₁, according to the amount of heat dissipation required for the first heat-dissipating heat exchanger 61 arranged on the first branching path 801A, thus being able to supply a liquid heat medium with a more appropriate amount of heat and the more appropriate flow rate to the first heat-dissipating heat exchanger 61 arranged on the first branching path 801A.

In the vehicular temperature control system 800 equipped with the bypass path 801C and the distribution ratio adjusting device 806 illustrated in Fig. 20 and the vehicular temperature control system 800 equipped with the first to m-th exit paths 801A1 and 801A2 and the mixing ratio adjusting device 807 illustrated in Fig. 21, when heat dissipation of a liquid heat medium at the first heat-dissipating heat exchanger 61 is not needed, performing control not to cause a liquid heat medium to flow through the first heat-dissipating heat exchanger 61 may be considered. However, such control causes the amount of heat of a liquid heat medium flowing through the first branching path 801A to become surplus. In such a configuration, it is favorable that the vehicular temperature control system 800 in the first example according to the present embodiment further includes a surplus heat heat-dissipating system, which dissipates surplus heat generated in the first branching path 801A. Since a liquid heat medium whose surplus heat has been dissipated by the surplus heat heat-dissipating system returns to the liquid heating device 1, it is possible to prevent the temperature of the liquid heat medium from becoming too high in the first chamber 2A. The time when heat dissipation of a liquid heat medium at the first heat-dissipating heat exchanger 61 is not needed is the time when an object to be heated by the first heat-dissipating heat exchanger 61 does not require heating and is, as specific examples, the time when, in a case where the first heat-dissipating heat exchanger 61 is a heat exchanger for battery heating, for example, the battery 59 has been sufficiently warmed up or has warmed up due to heat generation by the battery 59 itself, the time when, in a case where the first heat-dissipating heat exchanger 61 is a heat exchanger for floor heating, for example, a vehicle occupant does not need floor heating, and the time when, in a case where the first heat-dissipating heat exchanger 61 is a heat exchanger for seat heating, for example, a vehicle occupant does not need seat heating.

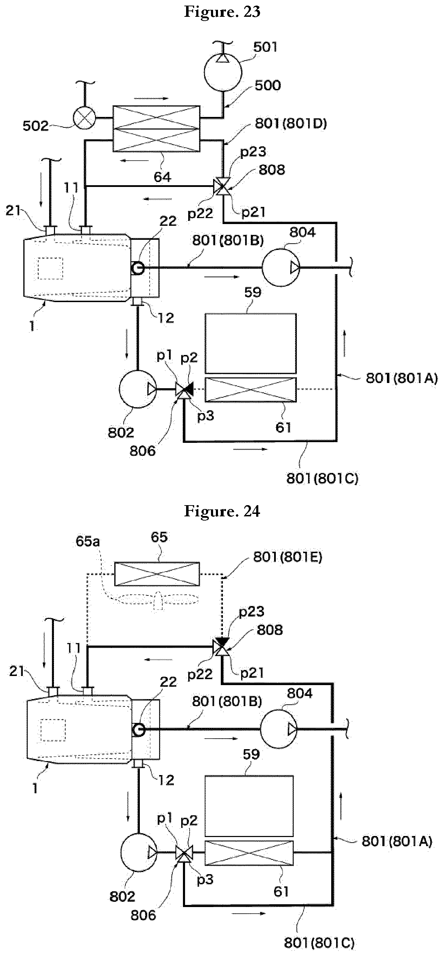

Fig. 22 and Fig. 23 are schematic block diagrams illustrating a first example of a vehicular temperature control system further including a surplus heat heat-dissipating system with regard to the vehicular temperature control system illustrated in Fig. 20, in which Fig. 22 is a view used to explain a stopped state of the surplus heat heat-dissipating system and Fig. 23 is a view used to explain an operating state of the surplus heat heat-dissipating system. In the vehicular temperature control system 800 including the surplus heat heat-dissipating system in the first example, it is favorable that the first branching path 801A includes, as illustrated in Fig. 22 and Fig. 23, the bypass path 801C, which bypasses the first heat-dissipating heat exchanger 61, and the distribution ratio adjusting device 806, which adjusts the flow rate for flowing through the bypass path 801C and the flow rate for flowing through the first heat-dissipating heat exchanger 61, and the vehicular temperature control system 800 further includes a surplus heat heat-dissipating system, which includes a surplus heat heat-dissipating heat exchanger 64, a first heat dissipation path 801D, which diverges from the first branching path 801A, passes through the surplus heat heat-dissipating heat exchanger 64, and merges with the first branching path 801A in front of the first flow path entrance 11, and a first heat dissipation path distribution device 808, which adjusts a flow rate for flowing through the first heat dissipation path 801D and a flow rate for flowing through the first branching path 801A.

While the surplus heat heat-dissipating heat exchanger 64 only needs to be a device capable of dissipating heat and is not particularly limited, Fig. 22 and Fig. 23 illustrate a configuration in which the surplus heat heat-dissipating heat exchanger 64 is, for example, a chiller configuring a refrigerant cycle 500. In the refrigerant cycle 500, at least, a compressor 501, a condenser (not illustrated), an expansion device 502, and the chiller (a surplus heat heat-dissipating heat exchanger) 64 are interconnected in order by a refrigerant pipe. The compressor 501 is arranged, for example, inside an engine compartment and operates by driving of an engine or by a built-in electric motor. The compressor 501 compresses intaken refrigerant and discharges the compressed refrigerant to the condenser (not illustrated). The condenser is a vehicle interior external heat exchanger which is arranged at a place likely to receive running wind occurring at the time of vehicle running, such as in front of an engine compartment and which performs heat exchange between refrigerant flowing through the inside thereof and external air including running wind. The condenser cools refrigerant discharged from the compressor 501 by heat exchange with external air, thus condensing and liquidizing the refrigerant. The expansion device 502 decompresses and expands the refrigerant condensed and liquidized by the condenser. The chiller 64 is a device which evaporates refrigerant by performing heat exchange between refrigerant decompressed by the expansion device 502 and a liquid heat medium passing through the first heat dissipation path 801D. To the refrigerant cycle 500, the evaporator 54 mounted in the vehicular air conditioner 50 can be further connected. In a case where the evaporator 54 is connected to the refrigerant cycle 500, a branching pipe (not illustrated) is connected to the refrigerant pipe at a more upstream side than the expansion device 502 illustrated in Fig. 22 and at a downstream side of the condenser (not illustrated), and an expansion device (not illustrated) different from the expansion device 502 (an expansion device for evaporator) and the evaporator 54 are connected in sequence to the branching pipe. The branching pipe is connected to a refrigerant pipe located at the downstream side of the evaporator 54 and between the chiller 64 and the compressor 501 illustrated in Fig. 22. With this configuration, a part of the refrigerant discharged from the compressor 501 and then condensed and liquefied by the condenser flows through the branching pipe and is sent to the expansion device for evaporator, and the remainder thereof is sent to the expansion device 502 illustrated in Fig. 22. Then, the refrigerant sent to the expansion device 502 is decompressed and expanded by the expansion device 502, is subjected to heat exchange with a liquid heat medium passing through the first heat dissipation path 801D at the chiller 64, and is then sent to the compressor 501. Moreover, the refrigerant sent to the expansion device for evaporator is decompressed and expanded by the expansion device for evaporator, is subjected to heat exchange with air to be sent into the vehicle interior at the evaporator 54, merges with the refrigerant having passed through the chiller 64 in front of the compressor 501, and is then sent to the compressor 501.

The first heat dissipation path 801D is a flow path which allows a liquid heat medium flowing through the first branching path 801A to pass through the chiller 64, and configures a part of the liquid heat medium circuit 801. The first heat dissipation path 801D diverges from the first branching path 801A at the downstream side of the first heat-dissipating heat exchanger 61 and then merges with the first branching path 801A in front of the first flow path entrance 11.

The first heat dissipation path distribution device 808 is, for example, a distribution valve. It is favorable that the distribution valve includes, for example, a first port p21 as an entrance port, a second port p22 as an exit port connected to a warm water pipe configuring the first branching path 801A, and a third port p23 as an exit port connected to the first heat dissipation path 801D. In Fig. 22 and Fig. 23, three triangles representing the first heat dissipation path distribution device 808 represent the respective ports p21, p22, and p23 of the distribution valve, in which a filled triangle (in Fig. 22, p23) indicates a state in which the port has been shut off and an unfilled triangle (in Fig. 22, p21 and p22) indicates a state in which the port has been connected. In the first heat dissipation path distribution device 808, the degrees of opening of the respective exit ports p22 and p23 are controlled by a control unit (not illustrated), so that the flow rate for flowing through the first heat dissipation path 801D and the flow rate for flowing through the first branching path 801A are adjusted. The first port p21 is opened at all times.

The vehicular temperature control system 800 equipped with the surplus heat heat-dissipating system in the first example acts in the following way. When the temperature of a liquid heat medium having flown out from the first flow path exit 12 is lower than a target temperature or equal to the target temperature, the control unit (not illustrated) controls the distribution ratio adjusting device 806, as illustrated in Fig. 20, to make the second port p2 opened and make the third port p3 closed and controls the first heat dissipation path distribution device 808, as illustrated in Fig. 22, to make the first port p21 and the second port p22 opened and make the third port p23 closed. With this control operation, as with the action described above with regard to the vehicular temperature control system 800 illustrated in Fig. 20, the entire amount of a liquid heat medium having flown out from the first flow path exit 12 flows through the first heat-dissipating heat exchanger 61, and the entire amount of the liquid heat medium subjected to heat dissipation at the first heat-dissipating heat exchanger 61 flows directly to the first flow path entrance 11 without via the chiller 64 (illustrated in Fig. 22), thus flowing into the liquid heating device 1. Moreover, when the temperature of a liquid heat medium having flown out from the first flow path exit 12 is higher than the target temperature, as illustrated in Fig. 22, the control unit (not illustrated) controls the distribution ratio adjusting device 806 to make the first to third ports p1, p2, and p3 opened and controls the first heat dissipation path distribution device 808 to make the first port p21 and the second port p22 opened and make the third port p23 closed. With this control operation, as with the action described above with regard to the vehicular temperature control system 800 illustrated in Fig. 20, a liquid heat medium having flown out from the first flow path exit 12 is distributed to the first heat-dissipating heat exchanger 61 and the bypass path 801C, and the liquid heat medium subjected to heat dissipation at the first heat-dissipating heat exchanger 61 and the liquid heat medium having passed through the bypass path 801C flow from the first flow path entrance 11 into the liquid heating device 1 without via the chiller 64.

When heat dissipation of a liquid heat medium at the first heat-dissipating heat exchanger 61 is not required, regardless of the temperature of a liquid heat medium having flown out from the first flow path exit 12, as illustrated in Fig. 23, the control unit (not illustrated) controls the distribution ratio adjusting device 806 to make the first port p1 and the third port p3 opened and make the second port p2 closed and controls the first heat dissipation path distribution device 808 to make the first to third ports p21, p22, and p23 opened. With this control operation, the entire amount of a liquid heat medium having flown out from the first flow path exit 12 flows through the bypass path 801C while bypassing the first heat-dissipating heat exchanger 61. A part of the liquid heat medium having passed through the bypass path 801C directly flows through the first branching path 801A and then flows directly to the first flow path entrance 11, and the remainder of the liquid heat medium is distributed to the first heat dissipation path 801D. The liquid heat medium distributed to the first heat dissipation path 801D passes through the chiller 64, and, in the chiller 64, the heat of the liquid heat medium migrates to refrigerant flowing through the refrigerant cycle 500. As a result, the refrigerant is heated and evaporated, so that the liquid heat medium is subjected to heat dissipation. The liquid heat medium subjected to heat dissipation at the chiller 64 merges with the first branching path 801A in front of the first flow path entrance 11, and then flows from the first flow path entrance 11 into the liquid heating device 1. It is favorable that, at this time, the control unit (not illustrated) controls the first heat dissipation path distribution device 808 to adjust the degrees of opening of the second port p22 and the third port p23 according to the temperature of a liquid heat medium flowing through the first branching path 801A. More specifically, it is favorable that, as the temperature of a liquid heat medium flowing through the first branching path 801A is higher, the control unit (not illustrated) makes the degree of opening of the second port p22 smaller and make the degree of opening of the third port p23 larger. Alternatively, the control unit (not illustrated) can make the second port p22 closed and make the degree of opening of the third port p23 maximum. This enables efficiently dissipating surplus heat to decrease the temperature of a liquid heat medium returning back to the liquid heating device 1. While, as illustrated in Fig. 20 and Fig. 22, in a case where a liquid heat medium passes through the first heat-dissipating heat exchanger 61, a liquid heat medium flowing through the first branching path 801A returns back to the liquid heating device 1 after being subjected to heat dissipation, in a case where, as illustrated in Fig. 23, a liquid heat medium does not pass through the first heat-dissipating heat exchanger 61, the heat of a liquid heat medium flowing through the first branching path 801A becomes surplus. In such a case, in the vehicular temperature control system 800, as illustrated in Fig. 23, the surplus heat heat-dissipating system enables efficiently dissipating surplus heat of a liquid heat medium generated at the first branching path 801A and also effectively using the surplus heat for, for example, a heat source for air heating in vehicle interior air conditioning in the refrigerant cycle.

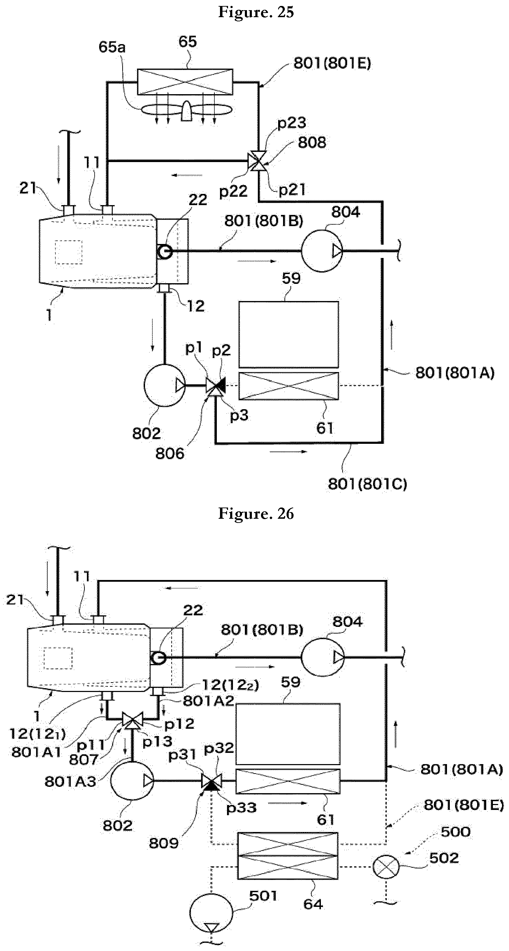

Fig. 24 and Fig. 25 are schematic block diagrams illustrating a second example of a vehicular temperature control system further including a surplus heat heat-dissipating system with regard to the vehicular temperature control system illustrated in Fig. 20, in which Fig. 24 is a view used to explain a stopped state of the surplus heat heat-dissipating system and Fig. 25 is a view used to explain an operating state of the surplus heat heat-dissipating system. The vehicular temperature control system 800 including the surplus heat heat-dissipating system in the second example is the same in basic configuration as the vehicular temperature control system 800 including the surplus heat heat-dissipating system in the first example illustrated in Fig. 22 and Fig. 23, except that a surplus heat heat-dissipating heat exchanger 65 is a vehicle interior external heat exchanger (radiator). Therefore, constituent components in common between them are omitted from description and constituent components different between them are mainly described.

The vehicle interior external heat exchanger (radiator), which is the surplus heat heat-dissipating heat exchanger 65, is, for example, a condenser which configures the refrigerant cycle 500 illustrated in Fig. 22 and Fig. 23 or a condenser which configures a refrigeration cycle (not illustrated) which circulates refrigerant to be supplied to the evaporator 54 illustrated in Fig. 20. The radiator 65 includes a cooling fan 65a, which sends air into a core of the radiator 65. The radiator 65 performs heat exchange between air passing through the core of the radiator 65 and a liquid heat medium passing through the inside of the radiator 65. The air passing through the core of the radiator 65 can be an airflow occurring by the cooling fan 65a or running wind.

The vehicular temperature control system 800 equipped with the surplus heat heat-dissipating system in the second example acts in the following way. When the temperature of a liquid heat medium having flown out from the first flow path exit 12 is lower than a target temperature or equal to the target temperature, the vehicular temperature control system 800 in the second example acts in a way similar to that in the vehicular temperature control system 800 equipped with the surplus heat heat-dissipating system in the first example illustrated in Fig. 22. Moreover, when the temperature of a liquid heat medium having flown out from the first flow path exit 12 is higher than the target temperature, as illustrated in Fig. 24, the vehicular temperature control system 800 in the second example acts in a way similar to that in the vehicular temperature control system 800 equipped with the surplus heat heat-dissipating system in the first example illustrated in Fig. 22.

When heat dissipation of a liquid heat medium at the first heat-dissipating heat exchanger 61 is not required, regardless of the temperature of a liquid heat medium having flown out from the first flow path exit 12, as illustrated in Fig. 25, a control unit (not illustrated) controls the distribution ratio adjusting device 806 to make the first port p1 and the third port p3 opened and make the second port p2 closed and controls the first heat dissipation path distribution device 808 to make the first to third ports p21, p22, and p23 opened. Moreover, it is favorable that the control unit (not illustrated) performs control to cause the cooling fan 65a to operate. With this control operation, the entire amount of a liquid heat medium having flown out from the first flow path exit 12 flows through the bypass path 801C while bypassing the first heat-dissipating heat exchanger 61. A part of the liquid heat medium having passed through the bypass path 801C directly flows through the first branching path 801A and then flows directly to the first flow path entrance 11, and the remainder of the liquid heat medium is distributed to the first heat dissipation path 801D. The liquid heat medium distributed to the first heat dissipation path 801D passes through the radiator 65, and, in the radiator 65, the heat of the liquid heat medium migrates to air passing through the core of the radiator 65. This causes the liquid heat medium to be subjected to heat dissipation. The liquid heat medium subjected to heat dissipation at the radiator 65 merges with the first branching path 801A in front of the first flow path entrance 11, and then flows from the first flow path entrance 11 into the liquid heating device 1. In the vehicular temperature control system 800, as illustrated in Fig. 25, the surplus heat heat-dissipating system enables efficiently dissipating surplus heat of a liquid heat medium generated at the first branching path 801A.

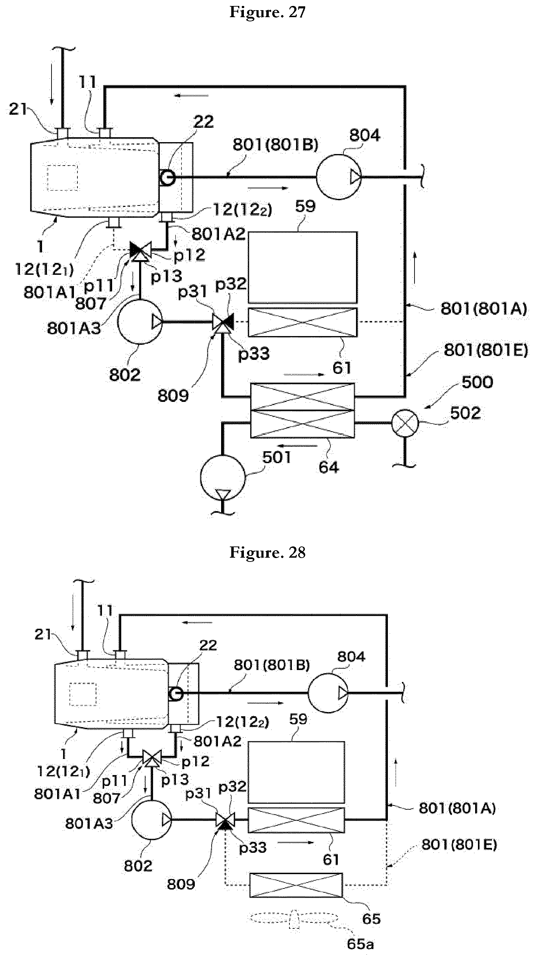

Fig. 26 and Fig. 27 are schematic block diagrams illustrating a third example of a vehicular temperature control system further including a surplus heat heat-dissipating system with regard to the vehicular temperature control system illustrated in Fig. 21, in which Fig. 26 is a view used to explain a stopped state of the surplus heat heat-dissipating system and Fig. 27 is a view used to explain an operating state of the surplus heat heat-dissipating system. In the vehicular temperature control system 800 including the surplus heat heat-dissipating system in the third example, it is favorable that the first flow path exit 12 includes, as illustrated in Fig. 26 and Fig. 27, the first-numbered to m-th-numbered ("m" being a natural number greater than or equal to 2) first flow path exits 12₁ and 12₂ arranged along the flow direction of the flow path in sequence from the upstream side in the flow direction, and the first branching path 801A includes the first to m-th exit paths 801A1 and 801A2, which are connected to respective first flow path exits of the first-numbered to m-th-numbered first flow path exits 12₁ and 12₂, the confluent path 801A3, which converges the first to m-th exit paths 801A1 and 801A2, and the mixing ratio adjusting device 807, which, while causing a liquid heat medium to flow from the m-th exit path 801A2 to the confluent path 801A3, adjusts the flow rates of the liquid heat medium for flowing from the first to (m-1)th exit paths 801A1 to the confluent path 801A3, and it is favorable that the vehicular temperature control system 800 further includes a surplus heat heat-dissipating system which includes the surplus heat heat-dissipating heat exchanger 64, a second heat dissipation path 801E, which bypasses the first heat-dissipating heat exchanger 61, passes through the surplus heat heat-dissipating heat exchanger 64, and merges with the first branching path 801A at the downstream side of the first heat-dissipating heat exchanger 61, and a second heat dissipation path distribution device 809, which adjusts the flow rate for flowing through the first heat-dissipating heat exchanger 61 and a flow rate for flowing through the second heat dissipation path 801E.

While the surplus heat heat-dissipating heat exchanger 64 is not particularly limited, Fig. 26 and Fig. 27 illustrate a configuration in which the surplus heat heat-dissipating heat exchanger 64 is, for example, a chiller configuring the refrigerant cycle 500. The chiller (surplus heat heat-dissipating heat exchange) 64 is similar to the chiller 64 illustrated in Fig. 22 and Fig. 23.

The second heat dissipation path 801E is a flow path which allows a liquid heat medium flowing through the first branching path 801A to pass through the chiller 64, and configures a part of the liquid heat medium circuit 801. The second heat dissipation path 801E diverges from the first branching path 801A at the upstream side of the first heat-dissipating heat exchanger 61 and then merges with the first branching path 801A at the downstream side of the first heat-dissipating heat exchanger 61.

The second heat dissipation path distribution device 809 is, for example, a distribution valve. It is favorable that the distribution valve includes, for example, a first port p31 as an entrance port, a second port p32 as an exit port connected to the side of the first heat-dissipating heat exchanger 61, and a third port p33 as an exit port connected to the second heat dissipation path 801E. In Fig. 26 and Fig. 27, three triangles representing the second heat dissipation path distribution device 809 represent the respective ports p31, p32, and p33 of the distribution valve, in which a filled triangle (in Fig. 26, p33) indicates a state in which the port has been shut off and an unfilled triangle (in Fig. 26, p31 and p32) indicates a state in which the port has been connected. In the second heat dissipation path distribution device 809, the degrees of opening of the respective exit ports p32 and p33 are controlled by a control unit (not illustrated), so that the flow rate for flowing through the first heat-dissipating heat exchanger 61 and the flow rate for flowing through the second heat dissipation path 801E are adjusted. The first port p31 is opened at all times.

The vehicular temperature control system 800 equipped with the surplus heat heat-dissipating system in the third example acts in the following way. When the temperature of a liquid heat medium having flown out from the m-th-numbered first flow path exit 12₂ is lower than a target temperature or equal to the target temperature, the control unit (not illustrated) controls the mixing ratio adjusting device 807, as illustrated in Fig. 21, to make the first port p11 closed and make the second port p12 and the third port p13 opened and controls the second heat dissipation path distribution device 809, as illustrated in Fig. 26, to make the first port p31 and the second port p32 opened and make the third port p33 closed. With this control operation, as with the action described above with regard to the vehicular temperature control system 800 illustrated in Fig. 21, the entire amount of a liquid heat medium flowing through the confluent path 801A3 derives from a liquid heat medium having flown out from the m-th-numbered first flow path exit 12z, and the entire amount of a liquid heat medium sufficiently heated in the first chamber 2A flows through the first heat-dissipating heat exchanger 61 without passing through the chiller 64 (illustrated in Fig. 26), is subjected to heat dissipation at the first heat-dissipating heat exchanger 61, and then flows from the first flow path entrance 11 into the liquid heating device 1. Moreover, when the temperature of a liquid heat medium having flown out from the m-th-numbered first flow path exit 12₂ is higher than the target temperature, as illustrated in Fig. 26, the control unit (not illustrated) controls the mixing ratio adjusting device 807 to make the first port p11, the second port p12, and the third port p13 opened and controls the second heat dissipation path distribution device 809 to make the first port p31 and the second port p32 opened and make the third port p33 closed. With this control operation, as with the action described above with regard to the vehicular temperature control system 800 illustrated in Fig. 21, a liquid heat medium flowing through the confluent path 801A3 derives from a mixed liquid heat medium obtained by mixing a liquid heat medium having flown out from the m-th-numbered first flow path exit 12₂ with a liquid heat medium having flown out from the first-numbered first flow path exit 12₁, so that the entire amount of a liquid heat medium at a temperature lower than that in a case where the entire amount of the liquid heat medium flowing through the confluent path 801A3 is only the liquid heat medium having flown out from the m-th-numbered first flow path exit 12₂ flows through the first heat-dissipating heat exchanger 61 without passing through the chiller 64, is subjected to heat dissipation at the first heat-dissipating heat exchanger 61, and then flows from the first flow path entrance 11 into the liquid heating device 1.

When heat dissipation of a liquid heat medium at the first heat-dissipating heat exchanger 61 is not required, regardless of the temperature of a liquid heat medium having flown out from the m-th-numbered first flow path exit 12z, as illustrated in Fig. 27, the control unit (not illustrated) controls the mixing ratio adjusting device 807 to make the first port p11 closed and make the second port p12 and the third port p13 opened and controls the second heat dissipation path distribution device 809 to make the first port p31 and the third port p33 opened and make the second port p32 closed. With this control operation, the entire amount of a liquid heat medium flowing through the confluent path 801A3 derives from a liquid heat medium having flown out from the m-th-numbered first flow path exit 12z, and the entire amount of the liquid heat medium flowing through the confluent path 801A3 bypasses the first heat-dissipating heat exchanger 61 and flows through the second heat dissipation path 801E. In the second heat dissipation path 801E, the heat of a liquid heat medium migrates, inside the chiller 64, to refrigerant flowing through the refrigerant cycle 500. As a result, the refrigerant is heated and evaporated, so that the liquid heat medium is subjected to heat dissipation. The liquid heat medium subjected to heat dissipation at the chiller 64 merges with the first branching path 801A at the downstream side of the first heat-dissipating heat exchanger 61, and then flows from the first flow path entrance 11 into the liquid heating device 1. While, as illustrated in Fig. 21 and Fig. 26, in a case where a liquid heat medium passes through the first heat-dissipating heat exchanger 61, the liquid heat medium returns back to the liquid heating device 1 after being subjected to heat dissipation, in a case where, as illustrated in Fig. 27, a liquid heat medium does not pass through the first heat-dissipating heat exchanger 61, the heat of a liquid heat medium flowing through the first branching path 801A becomes surplus. In such a case, in the vehicular temperature control system 800, as illustrated in Fig. 27, the surplus heat heat-dissipating system enables efficiently dissipating surplus heat of a liquid heat medium generated at the first branching path 801A and also effectively using the surplus heat for, for example, a heat source for air heating in vehicle interior air conditioning in the refrigerant cycle.

Fig. 28 and Fig. 29 are schematic block diagrams illustrating a fourth example of a vehicular temperature control system further including a surplus heat heat-dissipating system with regard to the vehicular temperature control system illustrated in Fig. 21, in which Fig. 28 is a view used to explain a stopped state of the surplus heat heat-dissipating system and Fig. 29 is a view used to explain an operating state of the surplus heat heat-dissipating system. The vehicular temperature control system 800 including the surplus heat heat-dissipating system in the fourth example is the same in basic configuration as the vehicular temperature control system 800 including the surplus heat heat-dissipating system in the third example illustrated in Fig. 26 and Fig. 27, except that the surplus heat heat-dissipating heat exchanger 65 is a vehicle interior external heat exchanger (radiator). Therefore, constituent components in common between them are omitted from description and constituent components different between them are mainly described.

The vehicle interior external heat exchanger (radiator), which is the surplus heat heat-dissipating heat exchanger 65, is similar to, for example, the radiator 65 illustrated in Fig. 24 and Fig. 25.

The vehicular temperature control system 800 equipped with the surplus heat heat-dissipating system in the fourth example acts in the following way. When the temperature of a liquid heat medium having flown out from the m-th-numbered first flow path exit 12₂ is lower than a target temperature or equal to the target temperature, the vehicular temperature control system 800 in the fourth example acts in a way similar to that in the vehicular temperature control system 800 equipped with the surplus heat heat-dissipating system in the third example illustrated in Fig. 26. Moreover, when the temperature of a liquid heat medium having flown out from the m-th-numbered first flow path exit 12₂ is higher than the target temperature, as illustrated in Fig. 28, the vehicular temperature control system 800 in the fourth example acts in a way similar to that in the vehicular temperature control system 800 equipped with the surplus heat heat-dissipating system in the third example illustrated in Fig. 26.

When heat dissipation of a liquid heat medium at the first heat-dissipating heat exchanger 61 is not required, regardless of the temperature of a liquid heat medium having flown out from the m-th-numbered first flow path exit 12z, as illustrated in Fig. 29, a control unit (not illustrated) controls the mixing ratio adjusting device 807 to make the first port p11 closed and make the second port p12 and the third port p13 opened and controls the second heat dissipation path distribution device 809 to make the first port p31 and the third port p33 opened and make the second port p32 closed. Moreover, it is favorable that the control unit (not illustrated) performs control to cause the cooling fan 65a to operate. With this control operation, the entire amount of a liquid heat medium flowing through the confluent path 801A3 derives from a liquid heat medium having flown out from the m-th-numbered first flow path exit 12₂, and the entire amount of the liquid heat medium flowing through the confluent path 801A3 bypasses the first heat-dissipating heat exchanger 61 and flows through the second heat dissipation path 801E. In the second heat dissipation path 801E, the heat of the liquid heat medium migrates, inside the radiator 65, to air passing through the core of the radiator 65. This causes the liquid heat medium to be subjected to heat dissipation. The liquid heat medium subjected to heat dissipation at the radiator 65 merges with the first branching path 801A at the downstream side of the first heat-dissipating heat exchanger 61, and then flows from the first flow path entrance 11 into the liquid heating device 1. In the vehicular temperature control system 800, as illustrated in Fig. 29, the surplus heat heat-dissipating system enables efficiently dissipating surplus heat of a liquid heat medium generated at the first branching path 801A.

### (Vehicular Temperature Control System in Second Example)

Next, a vehicular temperature control system in a second example is described with reference to Fig. 30 to Fig. 35.

The liquid heating device which is applied to the vehicular temperature control system in the second example is the liquid heating devices 100 in the fifth example illustrated in Fig. 14 to Fig. 18. Thus, in the vehicular temperature control system 900 in the second example according to the present embodiment, with regard to the liquid heating device 100, it is favorable that, as illustrated in Fig. 14 to Fig. 18, the tank 102 includes one flow path 110 as a flow path, the plurality of flow path exits 112 (112₁ to 112ₙ) includes the first to n-th flow path exits arranged along the flow direction of the flow path 110 in sequence from the upstream side in the flow direction, and the first flow path exit 112₁ is located between the flow path entrance 111 and the n-th flow path exit 112, in the flow direction. Applying such the liquid heating device 100 enables supplying liquid heat media at respective different temperatures from one flow path 110.

In the vehicular temperature control system 900 in the second example, a liquid heat medium circuit 901 includes, as illustrated in Fig. 30, n branching paths 901A and 901B according to the number n of the flow path exits and an inflow path 901Z connected to the flow path entrance 111, and the n branching paths 901A and 901B merge with the inflow path 901Z in front of the flow path entrance 111. In a case where, for example, as illustrated in Fig. 30, the number n of the plurality of flow path exits is 2, the liquid heat medium circuit 901 includes a first branching path 901A and a second branching path 901B as branching paths.

With regard to the first branching path 901A, it is favorable that at least the liquid heating device 100 and the first heat-dissipating heat exchanger 61 are interconnected in order via warm water pipes 903a and 903b.

With regard to the second branching path 901B, it is favorable that at least the liquid heating device 100 and the second heat-dissipating heat exchanger 62 are interconnected in order via warm water pipes 904a and 904b.

The inflow path 901Z is a flow path for mixing a liquid heat medium having flown from the first branching path 901A and a liquid heat medium having flown from the second branching path 901B with each other and causing the mixed liquid heat medium to flow into the flow path entrance 111. It is favorable that the inflow path 901Z includes an integrated (multipurpose) pump 902. The integrated pump 902 is a device which pumps a liquid heat medium inside the liquid heat medium circuit 901.

The first heat-dissipating heat exchanger 61 and the second heat-dissipating heat exchanger 62 are similar to, for example, the first heat-dissipating heat exchanger 61 and the second heat-dissipating heat exchanger 62 arranged in the vehicular temperature control system 800 in the first example illustrated in Fig. 19.

The vehicular temperature control system 900 in the second example according to the present embodiment acts in the following way. In the first branching path 901A, a liquid heat medium is subjected to temperature control in the liquid heating device 100 and is then supplied from the first flow path exit 112₁ to the first heat-dissipating heat exchanger 61 through the warm water pipe 903a. In the first heat-dissipating heat exchanger 61, the heat of a liquid heat medium is used for heating of, for example, a battery, so that heat is dissipated from the liquid heat medium. The liquid heat medium from which heat has been dissipated merges with the inflow path 901Z through the warm water pipe 903b, then flows from the flow path entrance 111 into the tank 102, and is then subjected to temperature control again. On the other hand, in the second branching path 901B, a liquid heat medium is subjected to temperature control in the liquid heating device 100 and is then supplied from the second flow path exit 112₂ to the second heat-dissipating heat exchanger 62 through the warm water pipe 904a. In the second heat-dissipating heat exchanger 62, the heat of a liquid heat medium is used for heating of, for example, air to be sent into a vehicle interior, so that heat is dissipated from the liquid heat medium. The liquid heat medium from which heat has been dissipated merges with the inflow path 901Z through the warm water pipe 904b, then flows from the flow path entrance 111 into the tank 102, and is then subjected to temperature control again. At this time, the temperature of a liquid heat medium which is supplied from the first flow path exit 112₁ to the first heat-dissipating heat exchanger 61 is lower than the temperature of a liquid heat medium which is supplied from the second flow path exit 112₂ to the second heat-dissipating heat exchanger 62. The above-described action enables the vehicular temperature control system 900 in the second example, as with the vehicular temperature control system 800 in the first example, to supply liquid heat media at respective appropriate temperatures according to the amounts of heat dissipation respectively required for a plurality of heat-dissipating heat exchangers mounted in a vehicle. More specifically, the vehicular temperature control system 900 is able to supply a liquid heat medium with an amount of heat of, for example, 2 kW/h from the first flow path exit 112₁ to the first heat-dissipating heat exchanger (for example, a heat exchanger for battery heating) 61 and supply a liquid heat medium with an amount of heat of, for example, 5 kW/h from the second flow path exit 112₂ to the second heat-dissipating heat exchanger (for example, a heater core) 62.

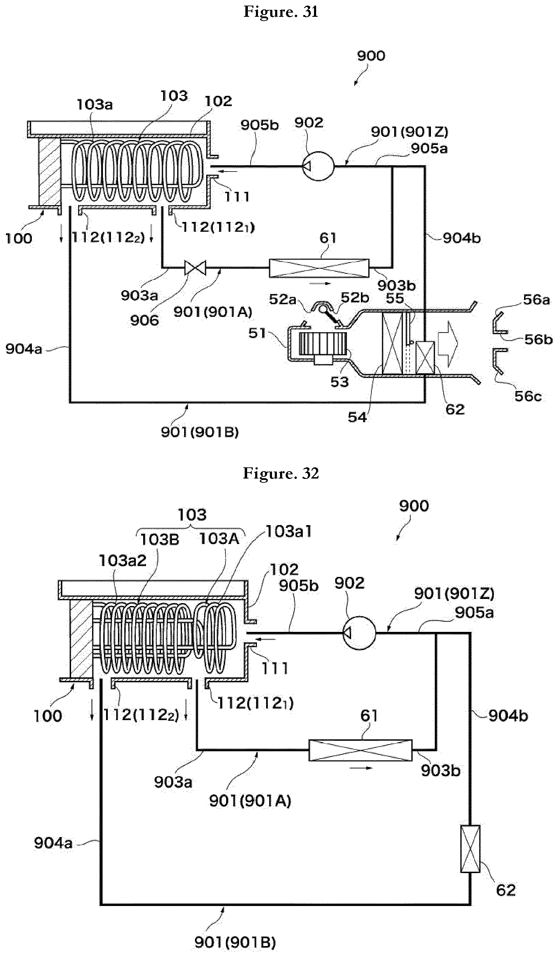

Fig. 31 is a schematic block diagram illustrating a first modification example of the vehicular temperature control system in the second example according to the present embodiment. In the vehicular temperature control system 900 in the second example according to the present embodiment, it is favorable that the heater 103 includes one heat generation portion 103a and the first branching path 901A includes an on-off valve 906. The on-off valve 906 is a device which opens and closes the first branching path 901A. While Fig. 31 illustrates a configuration in which, as an example, the on-off valve 906 is arranged on the warm water pipe 903a which connects the first flow path exit 112₁ and the inflow port of the first heat-dissipating heat exchanger 61, the present invention is not limited to this, and the on-off valve 906 can be arranged on the warm water pipe 903b which connects the outflow port of the first heat-dissipating heat exchanger 61 and the inflow path 901Z. When heat dissipation of a liquid heat medium at the first heat-dissipating heat exchanger 61 is not required, a control unit (not illustrated) performs control to close the on-off valve 906, thus being able to stop a liquid heat medium from flowing into the first heat-dissipating heat exchanger 61. It is favorable that the on-off valve 906 has an opening regulating function. This enables adjusting a flow rate of a liquid heat medium flowing into the first heat-dissipating heat exchanger 61 according to the amount of heat dissipation required for the first heat-dissipating heat exchanger 61 and thus enables supplying a liquid heat medium with the more appropriate flow rate to the first heat-dissipating heat exchanger 61. Moreover, a pump (not illustrated) can be arranged instead of the on-off valve 906. The first branching path 901A including a pump enables attaining an advantageous effect similar to that attained in a case where the on-off valve 906 with the opening regulating function is provided. In a case where the heater 103 includes only one heat generation portion 103a, it is favorable that the second branching path 901B, which is connected to the n-th flow path exit (in Fig. 31, the second flow path exit 112₂) arranged on the most downstream side, is provided with no on-off valve. Always circulating a liquid heat medium flowing out from the n-th flow path exit enables preventing the liquid heat medium from remaining staying in the tank 102 of the liquid heating device 100 and, thus, preventing the liquid heat medium from being excessively heated to an unintended temperature due to remaining staying.

Fig. 32 is a schematic block diagram illustrating a second modification example of the vehicular temperature control system in the second example according to the present embodiment. In the vehicular temperature control system according to the present embodiment, it is favorable that, as illustrated in Fig. 32, the liquid heating device 100 includes, as the heater 103, the plurality of heater portions 103a1 and 103a2 arranged in series along the flow direction. The liquid heating device 100 illustrated in Fig. 32 is, for example, the liquid heating device 100 illustrated in Fig. 17. Setting the amounts of heat generation of the plurality of heaters 103a1 and 103a2 to respective different amounts of heat generation enables performing more precise temperature control and thus enables supplying liquid heat media with more appropriate amounts of heat according to the amounts of heat dissipation required for the respective heat-dissipating heat exchangers 61 and 62.

In the second modification example, for example, it is possible to perform the following control. In a case where the maximum amount of heat dissipation is required for the first heat-dissipating heat exchanger 61 and the maximum amount of heat dissipation is required for the second heat-dissipating heat exchanger 62, a control unit (not illustrated) performs control to cause both the first heater portion 103a1 and the second heater portion 103a2 to generate heat. This enables the vehicular temperature control system 900 to supply a liquid heat medium with an amount of heat of, for example, 2 kW/h from the first flow path exit 112₁ to the first heat-dissipating heat exchanger (for example, a heat exchanger for battery heating) 61 and supply a liquid heat medium with an amount of heat of, for example, 5 kW/h from the second flow path exit 112₂ to the second heat-dissipating heat exchanger (for example, a heater core) 62. Moreover, in a case where an amount of heat dissipation somewhat smaller than the maximum amount thereof is required for the first heat-dissipating heat exchanger 61 and the minimum amount of heat dissipation is required for the second heat-dissipating heat exchanger 62, the control unit (not illustrated) performs control to cause only the first heater portion 103a1 to generate heat and cause the second heater portion 103a2 to stop generating heat. This enables the vehicular temperature control system 900 to supply a liquid heat medium with an amount of heat of, for example, 1 kW/h from the first flow path exit 112₁ to the first heat-dissipating heat exchanger (for example, a heat exchanger for battery heating) 61 and supply a liquid heat medium with an amount of heat of, for example, 1 kW/h from the second flow path exit 112₂ to the second heat-dissipating heat exchanger (for example, a heater core) 62. In a case where the minimum amount of heat dissipation is required for the first heat-dissipating heat exchanger 61 and an amount of heat dissipation somewhat smaller than the maximum amount of heat dissipation is required for the second heat-dissipating heat exchanger 62, the control unit (not illustrated) performs control to cause the first heater portion 103a1 to stop generating heat and cause only the second heater portion 103a2 to generate heat. This enables the vehicular temperature control system 900 to supply a liquid heat medium with an amount of heat of, for example, 0.7 kW/h from the first flow path exit 112₁ to the first heat-dissipating heat exchanger (for example, a heat exchanger for battery heating) 61 and supply a liquid heat medium with an amount of heat of, for example, 2.5 kW/h from the second flow path exit 112₂ to the second heat-dissipating heat exchanger (for example, a heater core) 62. Furthermore, even when the heat generation at the first heater portion 103a1 is stopped, if the second heater portion 103a2 is caused to sufficiently generate heat, since a liquid heat medium circulating via the inflow path 901Z (a liquid heat medium flowing through the flow path entrance 111, the tank 102, and the first flow path exit 112₁) has a given amount of thermal energy, heat dissipation is able to be performed at the first heat-dissipating heat exchanger 61.

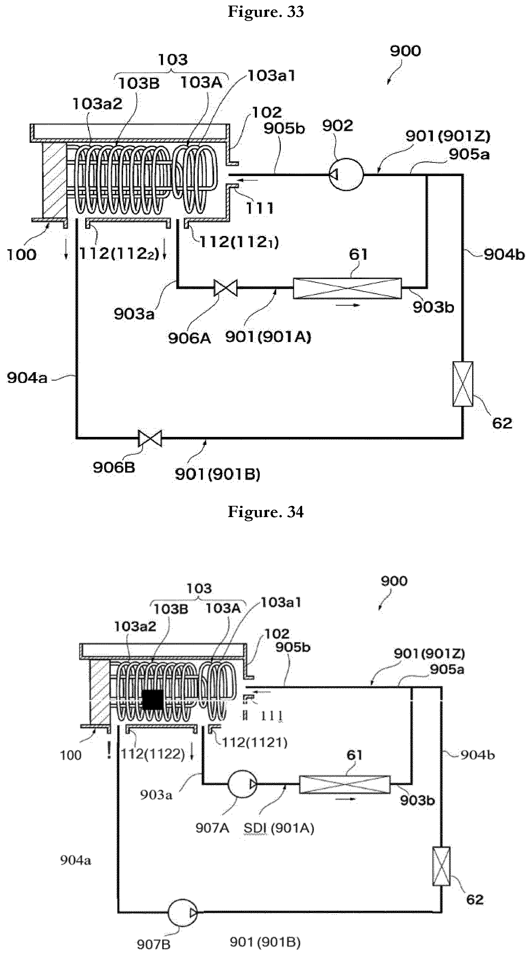

Fig. 33 is a schematic block diagram illustrating a third modification example of the vehicular temperature control system in the second example according to the present embodiment. In the vehicular temperature control system according to the present embodiment, it is favorable that, as illustrated in Fig. 33, the liquid heating device 100 includes, as the heater 103, the plurality of heater portions 103a1 and 103a2 arranged in series along the flow direction and the branching paths 901A and 901B as the first to n-th branching paths include on-off valves 906A and 906B, respectively. While Fig. 33 illustrates, as an example, a configuration in which the first on-off valve 906A arranged at the first branching path 901A is arranged on the warm water pipe 903a which connects the first flow path exit 112₁ and the inflow port of the first heat-dissipating heat exchanger 61, the present invention is not limited to this, and the first on-off valve 906A can be arranged on the warm water pipe 903b which connects the outflow port of the first heat-dissipating heat exchanger 61 and the inflow path 901Z. Moreover, while Fig. 33 illustrates, as an example, a configuration in which the second on-off valve 906B arranged at the second branching path 901B is arranged on the warm water pipe 904a which connects the second flow path exit 112₂ and the inflow port of the second heat-dissipating heat exchanger 62, the present invention is not limited to this, and the second on-off valve 906B can be arranged on the warm water pipe 904b which connects the outflow port of the second heat-dissipating heat exchanger 62 and the inflow path 901Z. Controlling opening and closing of each of the on-off valves 906A and 906B according to the amounts of heat dissipation required for the respective heat-dissipating heat exchangers 61 and 62 enables selectively supplying liquid heat media with more appropriate amounts of heat to the respective heat-dissipating heat exchangers 61 and 62. It is favorable that the on-off valve (in Fig. 33, second on-off valve) 906B provided at the branching path (in Fig. 33, second branching path 901B) connected to the n-th flow path exit arranged at the most downstream side is opened at all times. A liquid heat medium flowing through the second branching path 901B at all times enables preventing the liquid heat medium from remaining staying in the tank and, thus, preventing the liquid heat medium from being excessively heated to an unintended temperature due to remaining staying. On the other hand, in the branching path (in Fig. 33, first branching path 901A) connected to any one of the first to (n-1)th flow path exits arranged at a more upstream side than the n-th flow path exit, in a case where an object to be heated by heat dissipation of the first heat-dissipating heat exchanger 61 has reached a target temperature, the first on-off valve 906A may be closed to stop a liquid heat medium from passing through the first branching path 901A.

The third modification example of the vehicular temperature control system 900 in the second example illustrated in Fig. 33 acts, for example, in the following way. First, a case where heat dissipation is required for the first heat-dissipating heat exchanger 61 and heat dissipation is not required for the second heat-dissipating heat exchanger 62 is described. In a case where the maximum amount of heat dissipation is required for the first heat-dissipating heat exchanger 61 and heat dissipation is not required for the second heat-dissipating heat exchanger 62, a control unit (not illustrated) performs control to cause only the first heater portion 103a1 to generate heat, stop heat generation of the second heater portion 103a2, make the first on-off valve 906A opened, and make the second on-off valve 906B closed. With this control operation, a liquid heat medium circulates only in the first branching path 901A and no liquid heat medium circulates in the second branching path 901B. As a result, the vehicular temperature control system 900 is able to, without supplying a liquid heat medium to the second heat-dissipating heat exchanger (for example, a heater core) 62, supply a liquid heat medium with an amount of heat of, for example, 2 kW/h only to the first heat-dissipating heat exchanger (for example, a heat exchanger for battery heating) 61. At this time, since, inside the tank 102, heat generation of the second heater portion 103a2 is at a stop, it is possible to prevent or reduce a liquid heat medium from being heated to an unintended temperature in the more downstream side of the flow path than the first flow path exit 112₁.

Next, a case where, in the third modification example, heat dissipation is not required for the first heat-dissipating heat exchanger 61 and heat dissipation is required for the second heat-dissipating heat exchanger 62 is described. In this case, the control unit (not illustrated) performs control to make the first on-off valve 906A closed and make the second on-off valve 906B opened. Additionally, the control unit (not illustrated) controls on and off of the plurality of heater portions 103a1 and 103a2 according to the amount of heat dissipation required for the second heat-dissipating heat exchanger 62, thus being able to selectively provide a liquid heat medium with a more appropriate temperature to the second heat-dissipating heat exchanger 62. More specifically, in a case where heat dissipation is not required for the first heat-dissipating heat exchanger 61 and the amount of heat dissipation required for the second heat-dissipating heat exchanger 62 is small, the control unit (not illustrated) performs control to cause only the first heater portion 103a1 to generate heat, stop heat generation of the second heater portion 103a2, make the first on-off valve 906A closed, and make the second on-off valve 906B opened. With this control operation, a liquid heat medium heated only by the first heater portion 103a1 circulates only in the second branching path 901B and no liquid heat medium circulates in the first branching path 901A. As a result, the vehicular temperature control system 900 is able to, without supplying a liquid heat medium to the first heat-dissipating heat exchanger (for example, a heat exchanger for battery heating) 61, supply a liquid heat medium with an amount of heat of, for example, 2 kW/h only to the second heat-dissipating heat exchanger (for example, a heater core) 62. With regard to this configuration, in a case where it is wanted to increase the amount of heat dissipation at the second heat-dissipating heat exchanger 62, the control unit (not illustrated) performs control to stop heat generation of the first heater portion 103a1, cause only the second heater portion 103a2 to generate heat, make the first on-off valve 906A closed, and make the second on-off valve 906B opened. With this control operation, the vehicular temperature control system 900 is able to, without supplying a liquid heat medium to the first heat-dissipating heat exchanger (for example, a heat exchanger for battery heating) 61, supply a liquid heat medium with an amount of heat of, for example, 5 kW/h only to the second heat-dissipating heat exchanger (for example, a heater core) 62. In a case where it is wanted to make the amount of heat dissipation at the second heat-dissipating heat exchanger 62 maximum, the control unit (not illustrated) performs control to cause the first heater portion 103a1 and the second heater portion 103a2 to generate heat, make the first on-off valve 906A closed, and make the second on-off valve 906B opened. With this control operation, the vehicular temperature control system 900 is able to, without supplying a liquid heat medium to the first heat-dissipating heat exchanger (for example, a heat exchanger for battery heating) 61, supply a liquid heat medium with an amount of heat of, for example, 7 kW/h only to the second heat-dissipating heat exchanger (for example, a heater core) 62.

Lastly, a case where, in the third modification example, heat dissipation is required for the first heat-dissipating heat exchanger 61 and the second heat-dissipating heat exchanger 62 is described. In a case where heat dissipation is required for the first heat-dissipating heat exchanger 61 and heat dissipation is required for the second heat-dissipating heat exchanger 62, the control unit (not illustrated) performs control to cause both the first heater portion 103a1 and the second heater portion 103a2 to generate heat and make the first on-off valve 906A and the second on-off valve 906B opened. With this control operation, a liquid heat medium circulates in each of the first branching path 901A and the second branching path 901B. As a result, the vehicular temperature control system 900 is able to supply a liquid heat medium with an amount of heat of, for example, 2 kW/h to the first heat-dissipating heat exchanger (for example, a heat exchanger for battery heating) 61 and supply a liquid heat medium with an amount of heat of, for example, 5 kW/h to the second heat-dissipating heat exchanger (for example, a heater core) 62.

In the vehicular temperature control system 900 according to the present embodiment, it is favorable that each of the on-off valves 906A and 906B has an opening regulating function. Adjusting the flow rates of liquid heat media flowing into the respective heat-dissipating heat exchangers 61 and 62 according to the amounts of heat dissipation required for the respective heat-dissipating heat exchangers 61 and 62 enables selectively supplying liquid heat media with more appropriate amounts of heat and more appropriate flow rates to the respective heat-dissipating heat exchangers 61 and 62.

Fig. 34 is a schematic block diagram illustrating a fourth modification example of the vehicular temperature control system in the second example according to the present embodiment. In the vehicular temperature control system according to the present embodiment, it is favorable that, as illustrated in Fig. 34, the liquid heating device 100 includes, as the heater 103, the plurality of heater portions 103a1 and 103a2 arranged in series along the flow direction and the branching paths 901A and 901B as the first to n-th branching paths include pumps 907A and 907B, respectively. The fourth modification example illustrated in Fig. 34 is the same in basic configuration as the third modification example illustrated in Fig. 33 except that the pumps 907A and 907B are placed instead of the on-off valves 906A and 906B. Here, constituent components in common to those of the third modification example are omitted from description and constituent components different from those of the third modification example are mainly described.

While Fig. 34 illustrates, as an example, a configuration in which the first pump 907A arranged at the first branching path 901A is arranged on the warm water pipe 903a which connects the first flow path exit 112₁ and the inflow port of the first heat-dissipating heat exchanger 61, the present invention is not limited to this, and the first pump 907A can be arranged on the warm water pipe 903b which connects the outflow port of the first heat-dissipating heat exchanger 61 and the inflow path 901Z. Moreover, while Fig. 34 illustrates, as an example, a configuration in which the second pump 907B arranged at the second branching path 901B is arranged on the warm water pipe 904a which connects the second flow path exit 112₂ and the inflow port of the second heat-dissipating heat exchanger 62, the present invention is not limited to this, and the second pump 907B can be arranged on the warm water pipe 904b which connects the outflow port of the second heat-dissipating heat exchanger 62 and the inflow path 901Z. Controlling a flow rate of each of the pumps 907A and 907B according to the amounts of heat dissipation required for the respective heat-dissipating heat exchangers 61 and 62 enables selectively supplying liquid heat media with more appropriate amounts of heat to the respective heat-dissipating heat exchangers 61 and 62. In a case where the pumps 907A and 907B are provided at the respective branching paths 901A and 901B, the placement of the integrated pump 902 (for example, illustrated in Fig. 33) can be omitted. Moreover, it is favorable that the pump (in Fig. 34, second pump) 907B provided at the branching path (in Fig. 34, second branching path 901B) connected to the n-th flow path exit arranged at the most downstream side is caused to operate at all times. A liquid heat medium flowing through the second branching path 901B at all times enables preventing the liquid heat medium from remaining staying in the tank and, thus, preventing the liquid heat medium from being excessively heated to an unintended temperature due to remaining staying. On the other hand, in the branching path (in Fig. 34, first branching path 901A) connected to any one of the first to (n-1)th flow path exits arranged at the more upstream side than the n-th flow path exit, in a case where an object to be heated by heat dissipation of the first heat-dissipating heat exchanger 61 has reached a target temperature, an operation of the first pump 907A may be stopped to stop a liquid heat medium from passing through the first branching path 901A.

The fourth modification example of the vehicular temperature control system 900 in the second example illustrated in Fig. 34 acts in a way similar to that in the third modification example by replacing opening and closing of the first on-off valve 906A and the second on-off valve 906B in the third modification example of the vehicular temperature control system 900 in the second example illustrated in Fig. 33 with on and off of the first pump 907A and the second pump 907B, respectively. Additionally, adjusting flow rates for the first pump 907A and the second pump 907B enables selectively supplying liquid heat media with more appropriate amounts of heat and more appropriate flow rates to the respective heat-dissipating heat exchangers 61 and 62.

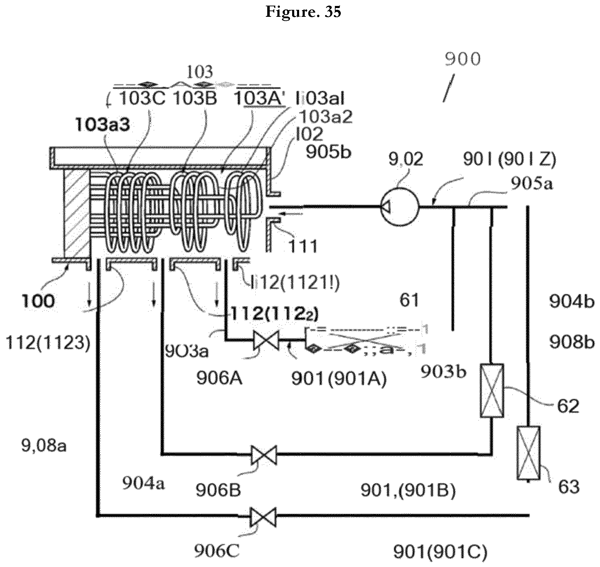

While, up to here, with regard to the vehicular temperature control systems 800 and 900 in the first example and the second example, a configuration in which the number n of flow path exits in the liquid heating device 1 or 100 is 2 has been described, the present invention is not limited to this, and the number n of flow path exits in the liquid heating device 1 or 100 can be greater than or equal to 3. This is described with, for example, the vehicular temperature control system 900 in the second example used as a representative and with reference to Fig. 35.

Fig. 35 is a schematic block diagram illustrating a fifth modification example of the vehicular temperature control system in the second example according to the present embodiment. In a case where the number n of flow path exits in the liquid heating device 100 is 3, as illustrated in Fig. 35, the liquid heat medium circuit 901 includes, as branching paths, a third branching path 901C in addition to the first branching path 901A and the second branching path 901B, and includes, as heat-dissipating heat exchangers, a third heat-dissipating heat exchanger 63 in addition to the first heat-dissipating heat exchanger 61 and the second heat-dissipating heat exchanger 62. In such a configuration, it is favorable that, for example, the first heat-dissipating heat exchanger 61 is a heat exchanger for battery heating, the second heat-dissipating heat exchanger 62 is a heater core for rear, which heats rear blowing air to be sent to the rear seat in a vehicle interior, and the third heat-dissipating heat exchanger 63 is a heater core for front, which heats front blowing air to be sent to the front seat in a vehicle interior. Although not illustrated, with regard to the vehicular temperature control system 800 in the first example, in a case where the number n of the plurality of flow path exits is greater than or equal to 3, the liquid heat medium circuit 801 includes, as three or more independent circulation circuits, the first branching path 801A, the second branching path 801B, a third branching path (not illustrated), ..., and the n-th branching path (not illustrated). Then, arranging heat-dissipating heat exchangers 61, 62, ... with amounts of heat dissipation suited to the respective temperatures of liquid heat media flowing out from the respective flow path exits 12, 22, ... as the first to n-th flow path exits on the respective branching paths 801A, 801B, ... as the first to n-th branching paths enables supplying liquid heat media at appropriate temperatures according to the amounts of heat dissipation of the respective heat-dissipating heat exchangers.

In the fifth modification example illustrated in Fig. 35, it is favorable that the branching paths 901A, 901B, and 901C include on-off valves 906A, 906B, and 906C, respectively, and it is more favorable that each of the on-off valves 906A, 906B, and 906C has an opening regulating function.

In the fifth modification example illustrated in Fig. 35, it is favorable that the heater 103 includes heater portions 103a1, 103a2, and 103a3 the number of which is equal to the number n of flow path exits, the first flow path exit 112₁ is provided at the side wall of the tank 102 surrounding the boundary region including the boundary between the first heater portion 103a1 and the second heater portion 103a2 and the region adjacent to the boundary, and the second flow path exit 112₂ is provided at the side wall of the tank 102 surrounding a boundary region including a boundary between the second heater portion 103a2 and the third heater portion 103a3 and a region adjacent to the boundary. With this configuration, in a case where the flow rate of a liquid heat medium stays constant, since the temperature of a liquid heat medium caused to flow out from the first flow path exit 112₁ is determined uniquely by the amount of heat generation of the first heater portion 103a1 and the temperature of a liquid heat medium caused to flow out from the second flow path exit 112₂ is determined uniquely by the amount of heat generation of the first heater portion 103a1 and/or the amount of heat generation of the second heater portion 103a2, it is possible to perform more precise temperature control.

Some examples of actions of the fifth modification example of the vehicular temperature control system 900 in the second example illustrated in Fig. 35 are described. For example, a case where heat dissipation is required for the first heat-dissipating heat exchanger 61 and heat dissipation is not required for the second heat-dissipating heat exchanger 62 and the third heat-dissipating heat exchanger 63 is described. In this case, a control unit (not illustrated) performs control to cause only the first heater portion 103a1 to generate heat, stop heat generation of the second heater portion 103a2 and the third heater portion 103a3, make only the first on-off valve 906A opened, and make the second on-off valve 906B and the third on-off valve 906C closed. With this control operation, the vehicular temperature control system 900 is able to, without supplying liquid heat media to the second heat-dissipating heat exchanger (for example, a heater core for rear) 62 and the third heat-dissipating heat exchanger (for example, a heater core for front) 63, supply a liquid heat medium with an amount of heat of, for example, 2 kW/h only to the first heat-dissipating heat exchanger (for example, a heat exchanger for battery heating) 61. At this time, since, inside the tank 102, heat generation of the second heater portion 103a2 and the third heater portion 103a3 is at a stop, it is possible to prevent or reduce a liquid heat medium from being heated to an unintended temperature in the more downstream side of the flow path than the first flow path exit 112₁.

Next, a case where, in the fifth modification example, heat dissipation is required for the third heat-dissipating heat exchanger 63 and heat dissipation is not required for the first heat-dissipating heat exchanger 61 and the second heat-dissipating heat exchanger 62 is described. In this case, the control unit (not illustrated) performs control to cause the first heater portion 103a1 and the third heater portion 103a3 to generate heat, stop heat generation of the second heater portion 103a2, make the first on-off valve 906A and the second on-off valve 906B closed, and make the third on-off valve 906C opened. With this control operation, the vehicular temperature control system 900 is able to, without supplying liquid heat media to the first heat-dissipating heat exchanger (for example, a heat exchanger for battery heating) 61 and the second heat-dissipating heat exchanger (for example, a heater core for rear) 62, supply a liquid heat medium with an amount of heat of, for example, 4 kW/h only to the third heat-dissipating heat exchanger (for example, a heater core for front) 63.

Next, a case where, in the fifth modification example, heat dissipation is required for the first heat-dissipating heat exchanger 61 and the second heat-dissipating heat exchanger 62 and heat dissipation is not required for the third heat-dissipating heat exchanger 63 is described. In this case, the control unit (not illustrated) performs control to cause the first heater portion 103a1 and the second heater portion 103a2 to generate heat, stop heat generation of the third heater portion 103a3, make the first on-off valve 906A and the second on-off valve 906B opened, and make the third on-off valve 906C closed. With this control operation, the vehicular temperature control system 900 is able to, without supplying a liquid heat medium to the third heat-dissipating heat exchanger (for example, a heater core for front) 63, supply a liquid heat medium with an amount of heat of, for example, 2 kW/h to the first heat-dissipating heat exchanger (for example, a heat exchanger for battery heating) 61, and supply a liquid heat medium with an amount of heat of, for example, 5 kW/h to the second heat-dissipating heat exchanger (for example, a heater core for rear) 62.

Lastly, a case where, in the fifth modification example, heat dissipation is required for the first heat-dissipating heat exchanger 61, the second heat-dissipating heat exchanger 62, and the third heat-dissipating heat exchanger 63 is described. In this case, the control unit (not illustrated) performs control to cause the first heater portion 103a1, the second heater portion 103a2, and the third heater portion 103a3 to generate heat and make the first on-off valve 906A, the second on-off valve 906B, and the third on-off valve 906C opened. With this control operation, the vehicular temperature control system 900 is able to supply a liquid heat medium with an amount of heat of, for example, 2 kW/h to the first heat-dissipating heat exchanger (for example, a heat exchanger for battery heating) 61, supply a liquid heat medium with an amount of heat of, for example, 5 kW/h to the second heat-dissipating heat exchanger (for example, a heater core for rear) 62, and supply a liquid heat medium with an amount of heat of, for example, 7 kW/h to the third heat-dissipating heat exchanger (for example, a heater core for front) 63.

The present invention is not limited to the actions of the fifth modification example described above as examples, and combining on and off of the respective heater portions 103a1, 103a2, and 103a3 and opening and closing of the respective on-off valves 906A, 906B, and 906C as appropriate enables selectively supplying liquid heat media with respective appropriate amounts of heat to desired heat-dissipating heat exchangers 61, 62, and 63. For example, in a case where heat dissipation is required for the heater core for front 63 as the third heat-dissipating heat exchanger and heat dissipation is not required for the first heat-dissipating heat exchanger 61 and the second heat-dissipating heat exchanger 62, when a vehicle occupant wants air heating at higher temperature at the front seat, the control unit (not illustrated) performs, with respect to the above-described control, control to further cause the second heater portion 103a2 to generate heat in addition to heat generation of the first heater portion 103a1 and the third heater portion 103a3, so that the vehicular temperature control system 900 is able to supply a liquid heat medium with an amount of heat of, for example, 7 kW/h only to the heater core for front 63. Alternatively, when a vehicle occupant wants air heating at lower temperature at the front seat, the control unit (not illustrated) performs, with respect to the above-described control, control to cause only the first heater portion 103a1 to generate heat and stop heat generation of the second heater portion 103a2 and the third heater portion 103a3, so that the vehicular temperature control system 900 is able to supply a liquid heat medium with an amount of heat of, for example, 2 kW/h only to the heater core for front 63.

Moreover, in the fifth modification example, the branching paths 901A, 901B, and 901C can include a first pump (not illustrated), a second pump (not illustrated), and a third pump (not illustrated) instead of the first on-off valve 906A, the second on-off valve 906B, and the third on-off valve 906C, respectively. In a case where pumps are included instead of the on-off valves 906A, 906B, and 906C, substituting opening and closing of the first on-off valve 906A, the second on-off valve 906B, and the third on-off valve 906C with on and off of the first pump, the second pump, and the third pump enables the vehicular temperature control system 900 to act in a way similar to that in the fifth modification example. Additionally, adjusting flow rates for the first pump, the second pump, and the third pump enables selectively supplying liquid heat media with more appropriate amounts of heat and more appropriate flow rates to the respective heat-dissipating heat exchangers 61, 62, and 63.

### Description of Reference Numerals and Signs

1 (1A, 1B, 1C, 1D): liquid heating device
2: tank
2A: first chamber
2B: second chamber
3: heater
3a: heat generation portion
3b: terminal portion
10: first flow path
11: first flow path entrance
12: first flow path exit
13: first peripheral wall
14: first side wall
15: first end wall
20: second flow path
21: second flow path entrance
22: second flow path exit
23: second peripheral wall
24: second side wall
24a: inner wall
24b: outer wall
25a, 25b: second end wall
30: electrical component chamber
31: electronic circuit board
32: transistor
33: electrical component chamber partition wall
33a: compartment wall
50: vehicular air conditioner
51: case
52a: outside air intake
52b: inside air intake
53: blower
54: evaporator
55: air-mix door
56a: defrost opening portion
56b: vent opening portion
56c: foot opening portion
59: battery
61: first heat-dissipating heat exchanger
62: second heat-dissipating heat exchanger
63: third heat-dissipating heat exchanger
64, 65: surplus heat heat-dissipating heat exchanger
100: liquid heating device
102: tank
103: heater
103A, 103B: heater
103a: heat generation portion
103a1, 103a2: heater portion (heat generation portion)
103b, 103b1, 103b2: terminal portion
110: flow path
111: flow path entrance
111a, 112a: connection portion
112 (112₁ - 112ₙ): flow path exit
113: peripheral wall
114: side wall
115a, 115b: end wall
130: electrical component chamber
500: refrigerant cycle
501: compressor
502: expansion device
800: vehicular temperature control system
801: liquid heat medium circuit
801A: first branching path
801A1, 801A2: exit path
801A3: confluent path
801B: second branching path
801C: bypass path
801D: first heat dissipation path
801E: second heat dissipation path
802: first pump
803a - 803f: warm water pipe
804: second pump
805a - 805c: warm water pipe
806: distribution ratio adjusting device
807: mixing ratio adjusting device
808: first heat dissipation path distribution device
809: second heat dissipation path distribution device
900: vehicular temperature control system
901: liquid heat medium circuit
901A: first branching path
901B: second branching path
901C: third branching path
901Z: inflow path
902: integrated pump
903a, 903b, 904a, 904b: warm water pipe
906, 906A, 906B, 906C: on-off valve
907A, 907B: pump

## Claims

1. A vehicular temperature control system comprising:
a liquid heat medium circuit (801, 901), in which a liquid heat medium circulates;
a liquid heating device (1, 100), which performs temperature control on the liquid heat medium; and
a plurality of heat-dissipating heat exchangers (61, 62), which dissipates heat from the liquid heat medium,
wherein the liquid heating device (1, 100) includes a tank (2, 102), through which the liquid heat medium flows, and a heater (3, 103), which heats the liquid heat medium,
wherein the tank (2, 102) includes at least one flow path (10, 20, 110), at least one flow path entrance (11, 21, 111), and a plurality of flow path exits (12, 22, 112₁, 112₂),
wherein the heater (3) is arranged inside one flow path (20, 110) of the at least one flow path,
wherein the plurality of flow path exits (12, 22, 112₁, 112₂) includes first to n-th flow path exits ("n" being a natural number greater than or equal to 2),
wherein the liquid heat medium flowing out from the first flow path exit (12, 112₁) is relatively lower in temperature than the liquid heat medium flowing out from the n-th flow path exit (22, 112₂),
wherein the liquid heat medium circuit (801, 901) includes first to n-th branching paths (801A, 801B, 901A, 901B) connected to respective flow path exits (12, 22, 112₁, 112₂) serving as the first to n-th flow path exits, and
wherein the plurality of heat-dissipating heat exchangers (61, 62) is arranged on respective branching paths (801A, 801B, 901A, 901B) serving as the first to n-th branching paths.

2. The vehicular temperature control system according to claim 1, with regard to the liquid heating device (100),
wherein the tank (102) includes one flow path (110) as one of the at least one flow path,
wherein the plurality of flow path exits (112₁, 112₂) includes, along a flow direction of the flow path, the first to n-th flow path exits arranged in sequence from an upstream side of the flow direction, and
wherein the first flow path exit (112₁) is located between the flow path entrance (111) and the n-th flow path exit (112z) in the flow direction.

3. The vehicular temperature control system according to claim 1, with regard to the liquid heating device (1),
wherein the tank (2) includes a first chamber (2A) and a second chamber (2B) formed as a compartment separate from the first chamber (2A),
wherein the first chamber (2A) includes a first flow path (10) as the flow path, a first flow path entrance (11) as the flow path entrance, and the first flow path exit (12),
wherein the second chamber (2B) includes a second flow path (20) as the flow path, a second flow path entrance (21) as the flow path entrance, and a second flow path exit (22) as the n-th flow path exit,
wherein the second flow path (20) includes a cylindrical second side wall (24) and a pair of second end walls (25a, 25b), which occlude respective both end portions of the second side wall (24),
wherein the heater (3) is arranged inside the second flow path (20),
wherein the second flow path exit (22) is provided on a more downstream side of the second flow path (20) than the second flow path entrance (21), and
wherein the first flow path (10) is adjacent to the second side wall (24), and the second side wall (24), which separates the first flow path (10) and the second flow path (20) from each other, is a heat exchange wall.

4. The vehicular temperature control system according to claim 2,
wherein the liquid heating device (100) includes, as the heater (103), a plurality of heater portions (103a1, 103a2) arranged in series along the flow direction, and
wherein each branching path (901A, 901B) of the first to n-th branching paths includes an on-off valve (906A, 906B).

5. The vehicular temperature control system according to claim 4, wherein the on-off valve (906A, 906B) has an opening regulating function.

6. The vehicular temperature control system according to claim 2,
wherein the liquid heating device (100) includes, as the heater (103), a plurality of heater portions (103a1, 103a2) arranged in series along the flow direction, and
wherein each branching path (901A, 901B) of the first to n-th branching paths includes a pump (907A, 907B).

7. The vehicular temperature control system according to claim 3, wherein the first branching path (801A) includes a bypass path (801C) for bypassing the heat-dissipating heat exchanger (61) and includes a distribution ratio adjusting device (806) which adjusts a flow rate for flowing through the bypass path (801C) and a flow rate for flowing through the heat-dissipating heat exchanger (61).

8. The vehicular temperature control system according to claim 3,
wherein the first flow path exit (12) includes, along a flow direction of the flow path, first-numbered to m-th-numbered ("m" being a natural number greater than or equal to 2) first flow path exits (12₁ to 12ₘ) arranged in sequence from an upstream side of the flow direction, and
wherein the first branching path (801A) includes first to m-th exit paths (801A1, 801A2) connected to respective first flow path exits of the first-numbered to m-th-numbered first flow path exits (12₁ to 12ₘ), a confluent path (801A3) which converges the first to m-th exit paths (801A1, 801A2), and a mixing ratio adjusting device (807) which, while causing the liquid heat medium to flow from the m-th exit path (801A2) to the confluent path (801A3), adjusts flow rates of the liquid heat medium for flowing from the first to (m-1)th exit paths (801A1) to the confluent path (801A3).

9. The vehicular temperature control system according to any one of claims 1 to 3, wherein the heat-dissipating heat exchanger (61) arranged on the first branching path (801A, 901A) is a heat exchanger for battery heating which heats a battery.
